# EUROPEAN PATENT SPECIFICATION

(11) **EP 0 553 765 B1**
(45) Date of publication and mention of the grant of the patent: **12.06.1996**
(21) Application number: 93101127.4
(22) Date of filing: 26.01.1993
(51) Int. Cl.: F16L 3/24, H02G 3/26

(54) **Conduit clamp**
Rohrschelle
Collier de serrage

(30) Priority: 27.01.1992 JP 7778/92 U; 27.08.1992 JP 65888/92 U; 22.12.1992 JP 356567/92
(43) Date of publication of application: 04.08.1993
(73) Proprietor: Onishi, Yoshio, Yao-shi, Osaka 581 (JP); Onishi, Masakatsu, Sakai-shi, Osaka 591 (JP); Nakayama, Hiroshi, Osaka-shi, Osaka 546 (BE)
(72) Inventor: Onishi, Yoshio, Yao-shi, Osaka 581 (JP); Onishi, Masakatsu, Sakai-shi, Osaka 591 (JP)
(74) Representative: Heusler, Wolfgang, Dipl.-Ing.

(56) References cited:
- DE-C- 4 128 157
- US-A- 3 295 805
- US-A- 4 770 378

## Description

### FIELD OF THE INVENTION

The present invention relates to a conduit clamp suitable for use to fix conduits to channel rails as described in the preamble of the claim 1. A conduit clamp of this general kind is shown in the US-A-4770378.

### BACKGROUND OF THE INVENTION

In such buildings as factory, business office, shop, condominium, warehouse, station, gymnasium, theatre, etc and in structures as tunnel, underpass, elevated railway, high level road, bridge, etc., conduits through which typically power and communication cables and wires are passed and those through which a fluid such as gas flows are laid on the ceiling, side wall, floor, etc, of such building and structure.

For laying such conduits, generally channel rails, called saddle, are disposed in parallel with and regularly spaced from each other and the conduits are fixed to the channel rails with clamps as as placed perpendicularly thereto. A prior art system for fixing conduits to channel rails is shown in the US-A-3295805 and includes an elongated base shaped to be situated within the channel rail in parallel relation thereto and having, at longitudinal intervals, a plurality of studs which have lengths to extend outwardly beyond the channel rail between its flanges. A pair of thrust plates are situated one on each side of said studs with at least parts thereof in abutment with said base. The thrust plates may be inserted vertically into the inlet opening of the channel rail and then they can be spread asunder, by the action of a coil spring, with their upper longitudinal edges abutting the inner walls of the flanges, and are urged upwardly by another coil spring situated between the base and the bottom wall of the channel rail so that they abut against the underside of the top walls of the channel rail. In this situation, a cap plate and conduit clamping blocks with the conduits held therein are placed on the top of the channel rail with the studs extending through openings in the blocks, and nuts are applied to clamp the conduits and press the blocks against the cap plate. This applies tension to the studs and places the thrust plates into compression.

In many cases, the conduits have to be fixed to each of a plurality of channel rails and a plurality of conduits is fixed in parallel with each other on one channel rail. Conduits each having a predetermined length are longitudinally joined to each other in succession and a plurality of such joined conduits has to be disposed in parallel with and regularly spaced from each other, Therefore, it is desirable to fasten the conduits provisionally at selected points to such an extent that they will not be disengaged from the channel rails but are movable longitudinally of the channel rails (at the primary step), and thereafter, to securely clamp the conduits after correctly positioned (at the secondary step). However, in the afore-described prior art system the space between individual clamping points along the channel rail is fixedly determined by the longitudinal intervals of the studs.

The process of provisionally fastening and then securely clamping needs much labor and time when using conventional systems. Additionally, conduits are not only to be clamped to, as placed on, channel rails suspended by suspension bolts from the ceiling with the channel directed upward but also they are to be clamped, as applied from below, to channel rails fixed to the ceiling with the channel directed downward.

In the former case, the conduits, there is only a small space between the ceiling and the channel rails in many cases. In the latter case, the working person is compelled to face up with the neck bent about 90° backward. This is a very painful posture.

Clamping of such conduit should desirably be simple, positive and safe. For reduction of costs and relief of pains, the clamping should be done efficiently with less labor and time. One of such conduit clamps is disclosed in the Japanese Unexamined Utility Model Publication No. 63-48085. This conduit clamp comprises a main body having a front T-shaped foot section and a retainer section contiguous from the foot section and which holds the semi-circumference of a conduit, a screw penetrated through a seat section provided on the opposite side of the foot section of the main body, an a buckle in form of a flat vane fitted on the screw. For fixing a conduit, the vane is limited from rotating by applying the longitudinal end face thereof to the inner wall of the flange of a rail member and the vane is then lifted along the flange inner wall by tightening the screw, until the upper side of the vane touches the wall lower portion of the rail member.

For clamping a conduit to a channel rail with this conventional clamp, however, the vane must be inserted into the channel rail as postured for the longitudinal direction thereof to be parallel with the channel direction of the channel rail, and then it must be raised by tightening the screw many turns. Thus, this work cannot easily be done by one person. It needs at least two persons; one has to operate the conduit clamp while the other is holding the conduit as applied to the channel rail. Much labor and time are required for the provisional fixation of the conduit.

In the provisional fixing in the primary step, the screw has to be tightened. If the screw is turned counterclockwise, the vane will possibly leave the screw so that it will drop into the channel rail. Removing the vane from inside the rail will take some time, which will cause the work efficiency to be lower. In case the channel rail is installed with the channel directed downward, the vane disengaged from the screw by mistake (too much loosening of the screw or the like) or the conduit coming off the main body of the clamp will possibly drop to the person at the head or face, which will cause a fatal or critical bodily injury to him.

Also the afore-mentioned US-A-4770378 proposes that a vane is suspended with a spring provided between a seat section and the head of a screw. When a conduit is provisionally fixed to a channel rail with this technique, the screw has to be pushed axially until the vane goes down to a free space under the drooping wall of the channel rail (primary step) and then the screw is tightened to turn the vane so as to be perpendicular to the channel rail (secondary step). Namely, this technique also needs two steps of operation, that is, much labor and time. The worker has to turn the wrist repeatedly many times, which causes him to be very fatigued. Since the screw must be turned in the provisional fixation of the conduit, if it is turned counterclockwise, the vane falls off the screw. Thus, the above-mentioned troubles are also unavoidable with this technique. The vane is held just in contact with the bottom side of the flat seat section; if a vibration is applied to the vane or the worker touches the screw carelessly by hand, the vane will be turned. Namely, it is difficult to hold the vane in parallel with the channel of the channel rail until the conduit is clamped.

In both these prior arts, the vane is limited from turning by applying both the longitudinal ends thereof to the inner walls of the channel-rail right and left flanges. This is also a problem. More particularly, the vane is actually nearly as long as the distance between the inner walls of the right and left flanges of the channel rail. The vane is likely to deflect if the tightening of the screw acts thereon; to avoid this, the vane should have an ample thickness. Thus, the clamp is massive and heavy as a whole, so it cannot be easily handled during transport or in clamping conduits to channel rails.

Because of its large length, the vane enters to a rather great depth in the curved retainer section of the main body when directed longitudinally in parallel with the channel in the channel rail. So the vane will be an interference in practice when the curved retainer section is applied to embrace a conduit. In this case, the vane must be turned 90° once for a perpendicularity to the channel in the channel rail. When the clamp is set to the channel rail, the vane has to be turned 90° again so as to be parallel to the channel in the channel rail. Otherwise, the vane cannot be introduced into the channel rail. For this adjustment, the screw must be turned (loosened or tightened), which will lead to a lower work efficiency.

Also, the longitudinal end faces of the vane are caused to abut the flange inner walls so that the vane is blocked against rotating. Thus, depending upon the surface condition of the flange inner walls, the vane will be obliquely caught there and so the screw cannot be tightened or the vane will be raised as it is in the oblique position when the screw is tightened. Further, it cannot be visually checked from outside whether the vane is well directed or not. Therefore, the conduit will be secured to the channel rail with no sufficient contact of the vane with the drooping wall bottom faces of the channel-rail flanges. The conduit cannot be fixed stably and positively. Namely, the prior-art conduit clamps cannot satisfactorily secure the conduits to the channel rails.

### SUMMARY OF THE INVENTION

The present invention has a primary object to overcome the above-mentioned drawbacks of the prior arts by providing a conduit clamp for use to fix conduits to channel rails, which can be used by any unskilled person very easily, safely, positively, very efficiently and effectively.

The present invention has another object to provide a conduit clamp, which, incorporating the features of the above-mentioned first conduit clamp, uses a small and lightweight buckle and of which the section for retaining the conduit is applicable onto the conduit simply without the necessity of correcting the direction of the buckle at each time.

The present invention has a still another object to provide a conduit clamp which needs only a small turning of the screw in the secondary step of fixation, with which the conduit can be securely fixed, and which can keep the conduit securely clamped without loosening for a long period after the fixation.

The "conduits" referred to herein do not include only the conduits through which power cables and wires or communication cables and wires passed are passed to protect them, conduits through a fluid such as gas is supplied, but also rods or reinforcing bars and bundles of cables protected by resin or the like applied to the outer surface thereof.

The above first object is accomplished by providing the conduit clamp according to the present invention, with features as claimed in the claim 1.

Owing to these features of the invention, just pushing the screw member axially will cause abutments of the buckle to engage on the channel rail and thus fix the conduit at least provisionally to the channel rail.

More particularly, the above-mentioned mechanism by which just pushing the screw member axially will cause the abutments of the buckle to engage on the channel rail comprises a means of holding the buckle in a predetermined direction with respect to the main body until the screw member is pushed, a means of turning the buckle through a predetermined angle until the stop faces abut the faces defining the inlet opening when the screw member is pushed axially, so that the abutments are positioned under lower faces of a pair of walls defining together an inlet opening of the channel rail, and a means of pulling the buckle to the main body (toward the head of the screw member) with the abutments kept positioned under the lower faces of the pair of walls. Preferable modes of implementation of this mechanism are described in the dependent claims and include the following :
(a) The main body has a seat section following the retainer section, and the seat section is coupled with the buckle by an elastic member which imparts a force of suspension and a rotation to the buckle; namely, the elastic member serves to rotate the buckle (claims 2 to 18).
(b) The buckle is suspended by the elastic member interposed between the seat section and the head of the screw member, and the buckle is rotated by the rotation of the screw member caused by the cooperation of a rotation lead section provided in the middle of the threaded body of the screw member with a guide hole in the seat section (claims 19 to 32).
(c) The buckle is rotated about the horizontal axis while in the above features (a) and (b), the buckle is rotated about the axis of the screw member (about the vertical axis). More particularly, the buckle consists of two parts, right and left, which can be opened and closed about the horizontal shaft piece (one or more). Thus the buckle is rotated as the two right and left parts are forced by the walls of the inlet opening, while it is suspended by an elastic member interposed between the seat section of the main body and the head of the screw member (claims 33 to 39).

The above second object is accomplished by providing a conduit clamp in which the buckle is blocked against rotation by utilizing the faces confining the inlet opening of the channel rail (will be referred to as "inlet opening" hereafter), not by the flange inner-walls of the channel rails as in the prior art. More particularly, the buckle has a total length larger than the width of the inlet opening but smaller than the distance between the inner walls of the channel-rail flanges. The buckle has provided at either longitudinal end thereof abutments engageable on the bottom faces of the walls defining together the inlet opening. The buckle also has provided near the abutments a pair of stoppers projecting higher than the abutments and which can be engaged on the faces confining the inlet opening when the buckle is rotated.

For holding the buckle directed in a predetermined direction in the main body, downward-bent lateral walls are formed on either side of the seat section of the main body and the buckle is fitted in or on the lateral walls. The lateral walls include pawl-like ones.

Generally a spring is used for the above-mentioned elastic member, but the present invention is not limited to such elastic member.

The preferable mode of implementation include the following:
(a) In said first mode the width of the buckle should be smaller than the distance between the walls of the inlet opening. The spring as the elastic member has one end thereof coupled at a portion of the seat section and the other end coupled at a portion of the buckle. In this condition, the buckle is forcibly rotated at least 90° and then fitted between the lateral bent walls of the seat section, whereby the buckle is held in a predetermined direction or in such a posture that the length thereof is parallel to the inlet opening of the channel rail. When the buckle is rotated forcibly through at least 90°, the spring is wound up. While the buckle is held by the seat section, the spring is kept as wound up. Since axial pushing of the screw member releases the rotation energy accumulated in the spring, the buckle is rotated upon passing by the lateral bent walls of the seat section. The stoppers are higher then the abutments, so that the stop end faces thereof abut the faces confining the inlet-opening, whereby the buckle is automatically blocked against rotation and take a position perpendicular to the inlet opening of the channel rail. Since the abutments are under the inlet-opening walls and the lifting force of the spring acts on the buckle, the abutments of the buckle are engaged on the underside of the inlet-opening walls so that the buckle is provisionally fixed.
(b) Also in the second mode, the width of the buckle should be smaller than the distance between the walls of the inlet opening. The buckle is fitted on the seat section of the main body under the action of the spring member and at this time, the rotation lead section located in the middle of the threaded body of the screw member is fitted at the beginning end thereof in the guide hole in the seat section. When the screw member is pushed axially, the rotation lead section passes through the guide hole, whereby the screw member rotates while falling and the buckle on the screw member rotates while falling along with the screw member. Thus the stop face abuts the faces defining the inlet-opening and thus blocked against rotation, as in (a) and the abutments are engaged to the underside of the inlet-opening walls under the action of the spring. This is the provisional fixation.
(c) In the third mode, the width of the buckle may not be smaller than the distance between the walls of the inlet walls. The right and left parts of the buckle are fitted to the seat section under the action of the spring, and held with the length of the fixture directed perpendicularly to the channel rail. Pushing the screw member will cause the right and left parts to touch the inlet-opening walls and thus closed about the horizontal shaft piece. When the buckle passes by the lower end of the inlet-opening, the right and left parts will be opened about the horizontal shaft piece. The buckle is engaged to the underside of the inlet-opening walls under the action of the spring. This is the provisional fixation.

In any of the above-mentioned modes, just pushing the screw member in the axial direction will cause the buckle to rotate through a predetermined angle while entering into the inlet opening of the channel rail and the buckle to elastically be engaged on the lower ends of the inlet-opening walls. Thus, the main body is pulled, and the conduit is held by the retainer section and provisionally fixed to the channel rail. Hence, the primary step of clamping is done very simply and efficiently. Since no operation is required to rotate the screw member in this step of clamping, no erroneous operation takes place. Namely, even a unskilled person can positively complete this provisional fixation. Therefore, even when the channel rail is laid with the inlet opening directed downward and a conduit is to be clamped to the channel rail as applied from below, the worker has to take a painful posture only for a very reduced time. Also this fixation of conduits with the conduit clamp according to the present invention needs no many persons, but can be simply effected by only a single worker.

Since it is not necessary to turn the screw member, the buckle will never be disengaged from the screw member due to any erroneous counterclockwise turning of the screw member. Therefore, the conduit clamp according to the present invention is very safe and free from any trouble that the buckle will not drop into the channel rail or the buckle and conduit will not drop down to the worker's head.

According to the present invention, the buckle is limited from rotation by the inlet opening much narrower than the distance between the flange inner-walls of the channel rail. Thus, the buckle can be designed extremely compact. Hence, even in the mechanisms of the modes (a) and (b), the buckle is prevented from entering to under the retainer section when the buckle is held longitudinally parallel to the length of the inlet opening of the channel rail. Therefore, when the retainer section of the main body is applied to the conduit in the initial step of fixation, no operation is required to change the direction of the buckle so that a conduit can be clamped with a reduced turning amount of the screw member, which considerably improves the work efficiency.

Further, the buckle may be shorter, so that the distance from the engagement with the screw member to the buckle is shorter. Thus the rigidity of the buckle can be made larger so that when a large force of tightening is applied to the engagement with the screw member, the buckle will never be deflected.

Basically, the conduit clamp according to the present invention comprises a main body having a retainer section with a seat section at one side thereof and a foot section on the other side, and the lower end portions of the foot section are engaged in the inlet opening of the channel rail. However, the present invention is not limited to this arrangement, but the retainer section may provided with seat sections at opposite sides thereof and each of the seat sections may be provided with a buckle specified in any of the modes (a), (b) and (c). Thus, the retainer section of the main body can be applied to a conduit and two screw members can be pushed to provisionally clamp the conduit.

Also the conduit clamps according to the present invention include those of which the main body has a retainer section composed of substantially more than one part so that the plurality of retainer parts are applied to hold a conduit. With this arrangement, a single main body can be used to fix a plurality of conduits at predetermined spacings and in parallel to each other.

The main body, buckle and elastic member of the conduct clamp according to the present invention are basically made of a metal, typically a ferrous material, but they may be made a nonmetallic material such as plastic or the like.

The channel rails to which the present invention is applicable include a type of which the inlet-opening walls droop vertically, a type of which the inlet-opening walls droop obliquely, a type of which the inlet-opening walls are horizontal and similar types.

These objects and advantages of the present invention will be better understood from the ensuing description made, by way of example, of particular embodiments of the present invention with reference to the drawings.

### BRIEF DESCRIPTION OF THE DRAWINGS

Fig. 1 is a perspective exploded view of a first embodiment in a first mode (type (a)) of the conduit clamp according to the present invention;
Fig. 2 is a perspective view of the first embodiment in the first mode at the completion of the secondary step of fixation, with the channel rail and conduit omitted from the illustration;
Fig. 3 is a partially-fragmentary front view of the first embodiment in the first mode, set on a channel rail;
Fig. 4 is an axial-sectional side elevation of the first embodiment in the first mode, set on a channel rail;
Fig. 5 is a plan view of a buckle used in the conduit clamp according to the first mode of the present invention;
Fig. 6 is a partially-fragmentary side elevation of the buckle in Fig. 5;
Fig. 7 is a plan view of an exemplar elastic member used in the conduit clamp according to the first mode;
Fig. 8 is a partially perspective view showing the assembling process in the first embodiment in the first mode;
Fig. 9 is a perspective view of a variant of the buckle used in the conduit clamp according to the first mode;
Fig. 10 is a perspective view of a variant of the buckle used in the conduit clamp according to the first mode, also with the relation thereof with the elastic member;
Fig. 11 is a plan view of an exemplar elastic member used in the variant of the buckle in Fig. 10;
Fig. 12 is a side elevation of the elastic member in Fig. 11;
Fig. 13 is a partially-fragmentary front view showing the setting of the buckle shown in Fig. 10 in the main body;
Fig. 14 is a front view showing the setting of a spring, as elastic member, having many turns, used in the first embodiment in the first mode;
Fig. 15 is a plan view of an exemplar spring having many turns;
Fig. 16 is a side elevation of the spring shown in Fig. 15;
Fig. 17 is a plan view of a variant of the buckle used in the conduit clamp according to the first mode;
Fig. 18 is a side elevation of the buckle in Fig. 17;
Fig. 19 is a plan view of a variant of the buckle and a spring used in the conduit clamp according to the first mode;
Fig. 20 is a perspective view of a variant of the buckle used in the conduit clamp according to the first mode, also with the relation thereof with the elastic member;
Fig. 21 is a perspective view of a variant of the buckle used in the conduit clamp according to the first mode;
Fig. 22 is a partially-fragmentary plan view of the first embodiment in the first mode, set on a channel rail;
Fig. 23 is a cross-sectional view of the first embodiment in the first mode, in which the screw member is pushed axially for provisional fixation of the conduit;
Fig. 24 is a front view of the first embodiment in Fig. 23;
Fig. 25 is a perspective view of a second embodiment in the first mode of the conduit clamp;
Fig. 26 is an axial-sectional view of the second embodiment, set on a channel rail;
Fig. 27 is an axial-sectional view of the second embodiment, in which the screw member is pushed to provisionally fix the conduit;
Fig. 28 is an axial-sectional view showing the state after the conduit is completely clamped;
Fig. 29 is a partially-fragmentary side elevation of a variant of the buckle used in the conduit clamp according to the first mode;
Fig. 30 is a front view of the buckle in Fig. 29;
Fig. 31 is a partially-fragmentary side elevation of the main body in the second embodiment;
Fig. 32 is a front view of a variant of the retention by the retainer section in the present invention;
Fig. 33 is a front view of the conduit clamp according to the first mode, set on a channel rail of which the inlet-opening walls droop obliquely;
Fig. 34 is a front view showing the provisional fixation in the example shown in Fig. 33;
Fig. 35 is a front view showing the conduit clamp according to the first mode, set on a channel rail of which the inlet-opening walls are horizontal;
Fig. 36 is a front view showing the provisional fixation in the example shown in Fig. 35;
Fig. 37 is an axial-sectional view showing an example fixation of more than one conduit according to the first mode;
Fig. 38 is a partially-fragmentary axial-sectional view showing an example fixation of more than one conduit with one main body in the conduit clamp according to the first mode;
Fig. 39 is a partially-fragmentary side elevation of a variant of the main body in use in the conduit clamp according to the first mode of the present invention;
Fig. 40 is a front view showing the use of a variant of the elastic member in the conduit clamp according to the first mode;
Fig. 41 is a front view of a conduit clamp according to the second mode (type (b)), set on a channel rail;
Fig. 42 is a side elevation of the conduit clamp in Fig. 41;
Fig. 43 is a perspective exploded view of the major part of the conduit clamp according to the second mode;
Fig. 44 is a front view showing the screw member being pushed in the conduit clamp according to the second mode;
Fig. 45 is a front view showing the provisional fixation with the screw member related from the pushed state;
Fig. 46 is a front view showing the application of the conduit clamp according to the second mode to another type of channel rail;
Fig. 47 is a front view showing the application of the conduit clamp according to the second mode to still another type of channel rail;
Fig. 48 is a perspective view of a variant of the rotation lead section in the conduit clamp according to the second mode;
Fig. 49 is a perspective view of a variant of the rotation lead section in the conduit clamp according to the second mode;
Fig. 50 is a plan view of an exemplar buckle used in the conduit clamp according to the second mode;
Fig. 51 is a partially-fragmentary side elevation of the buckle in Fig. 50;
Fig. 52 is a perspective view of a variant of the buckle in the conduit clamp according to the second mode;
Fig. 53 is a perspective view of a variant of the buckle in the conduit clamp according to the second mode;
Fig. 54 is a plan of a variant of the buckle in the conduit clamp according to the second mode;
Fig. 55 is a side elevation of the buckle in Fig. 54;
Fig. 56 is a perspective view of a variant of the buckle in the conduit clamp according to the second mode;
Fig. 57 is a perspective view of a variant of the buckle in the conduit clamp according to the second mode;
Fig. 58 is a perspective view of a variant of the buckle in the conduit clamp according to the second mode;
Fig. 59 is a plan view of a variant of the buckle in the conduit clamp according to the second mode;
Fig. 60 is a partially-fragmentary side elevation of the buckle in Fig. 59;
Fig. 61 is a partially-fragmentary side elevation showing the use of a variant of the main body in the conduit clamp according to the second mode;
Fig. 62 is a partially-fragmentary side elevation showing the use of a variant of the main body in the conduit clamp according to the second mode;
Fig. 63 is a front view showing the setting of the conduit clamp according to the third mode of the present invention;
Fig. 64 is a partial sectional view of the conduit clamp shown in Fig. 63;
Fig. 65 is a plan view of the conduit clamp in Fig. 63;
Fig. 66 is a partially-fragmentary plan view of a variant of the buckle used in the conduit clamp according to the third mode;
Fig. 67 is an axial-sectional front view of the buckle in Fig. 66;
Fig. 68 is a plan view of a variant of the buckle used in the conduit clamp according to the third mode;
Fig. 69 is a plan view of the buckle in Fig. 68;
Fig. 70 is a front view showing the state of the conduit clamp according to the third mode, in which pushing of the screw member is started;
Fig. 71 is a front view showing the state of the conduit clamp, in which the screw member is pushed to full extent from the state in Fig. 70;
Fig. 72 is a front view of the provisional fixation in which the screw member is released from the pushed state;
Fig. 73 is a front view of the complete fixation;
Fig. 74 is a front view showing the application of the conduit clamp according to the third mode to another type of channel clamp, with the screw member pushed to full extent;
Fig. 75 is a front view showing the state of the conduit clamp, in which the screw member is released from the pushed state;
Fig. 76 is a front view of the application of the conduit clamp according to the third mode to another type of channel rail, with the conduit clamp being set in place;
Fig. 77 is a side elevation showing the use of a variant of the main unit in the conduit clamp according to the third mode;
Fig. 78 is a side elevation showing the use of a variant of the main unit in the conduit clamp according to the third mode; and
Fig. 79 is a side elevation showing the use of a variant of the main unit in the conduit clamp according to the third mode.

### DETAILED DESCRIPTION OF THE PREFERRED EMBODIMENTS

The embodiments of the present invention will be discussed below with reference to the drawings.

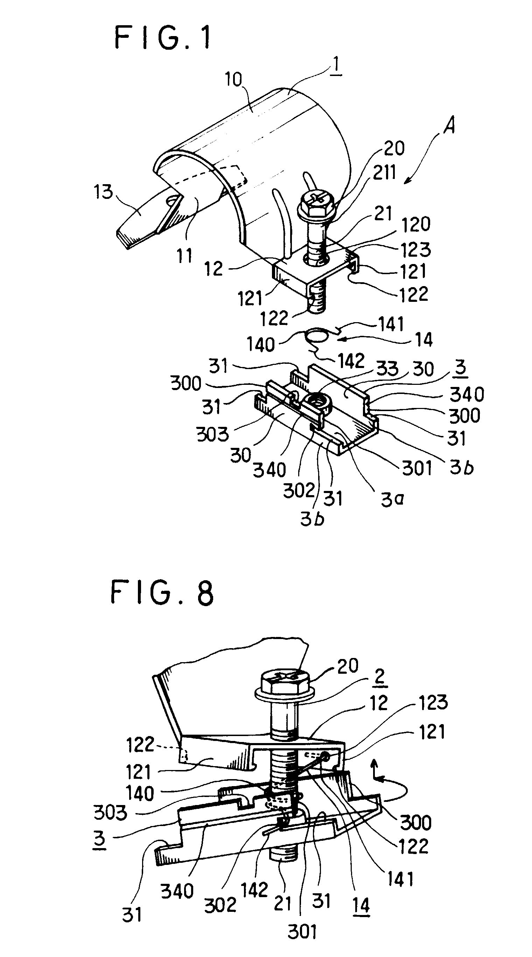

### First mode (see Figs. 1 to 40)

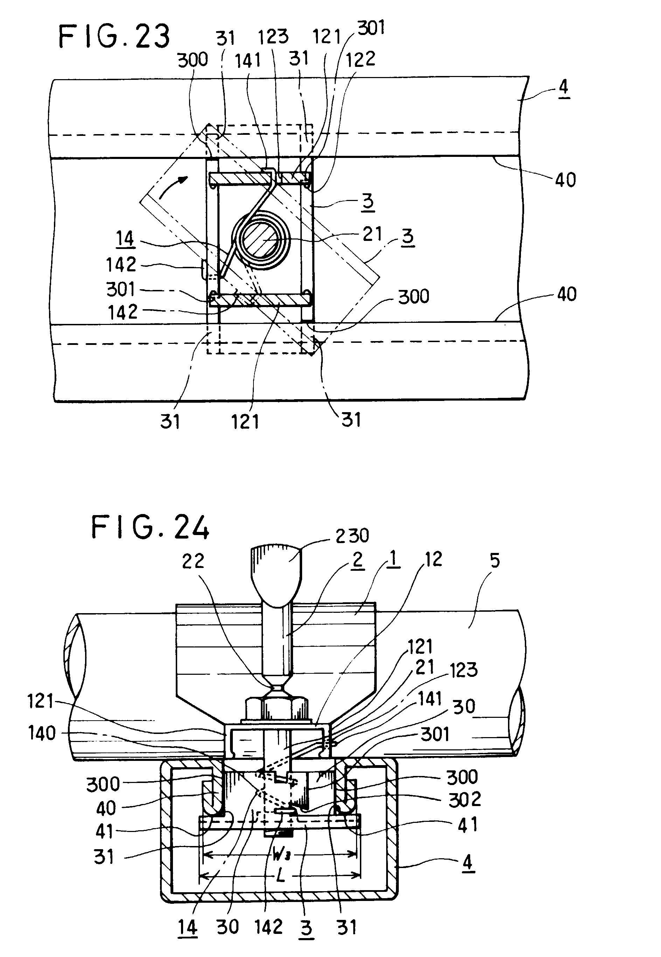

Figs. 1 to 8 shows the first embodiment in the first mode (type (a)) of the present invention, and Figs. 22 to 24 show the use thereof.

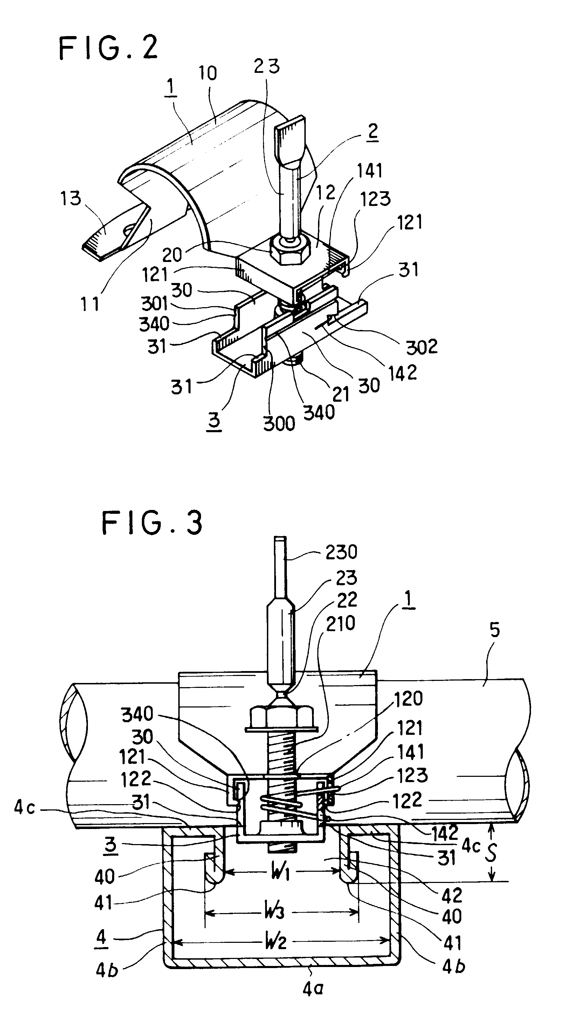

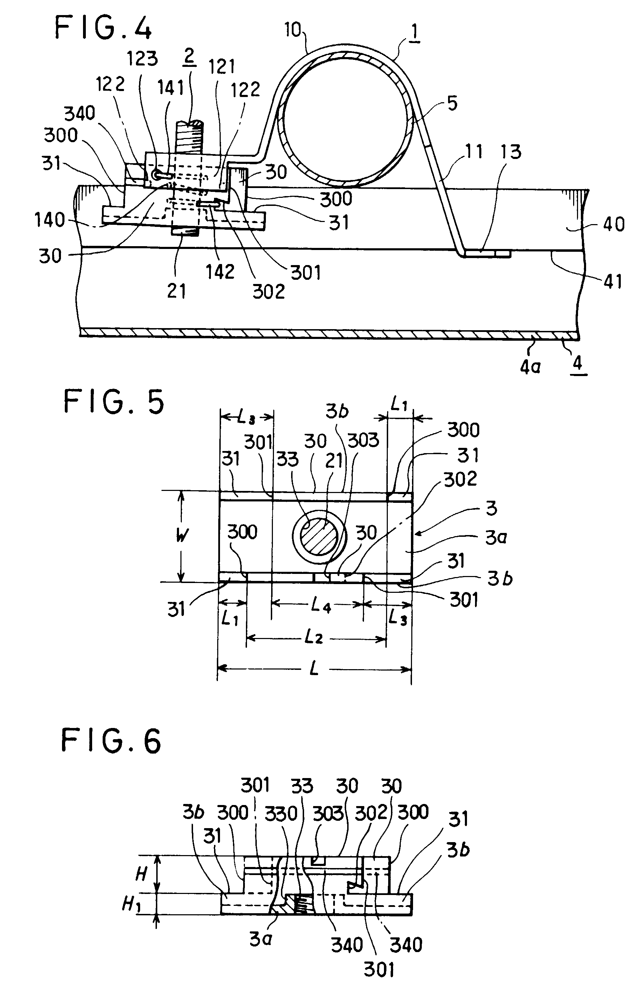

In Fig. 1, the reference A indicates generally a conduit clamp according to the first mode of the present invention. The conduit clamp A consists of a main body 1, screw member 2, buckle 3 and an elastic member 14 which lifts and rotates the buckle 3. In Figs. 3 and 4, the reference numerals 4 and 5 denote a channel rail as saddle and a conduit, respectively.

In this embodiment, the channel rail 4 is composed, as shown in Fig. 3, of a web 4a, a pair of flanges 4b provided at either side of the web 4a, and top walls 4c extending inwardly from the upper ends of the flanges 4b and extended by drooping walls 40 formed by bending at a right angle. Thus, an inlet opening 42 is defined by the a pair of inlet-opening walls 40. The inlet opening 42 has a width W₁ smaller than the distance W₂ between the inner walls of the flanges 4b. The inlet-opening walls 40 have extensions reversed outside thereof and which extend upward.

A plurality of channel rails 4 is laid as regularly spaced and each is connected at either longitudinal end thereof to a suspension rod laid on the wall of a construction or building, with the inlet opening 42 directed upward, or the web 4a is fixed to the ceiling or the like with the inlet opening 42 directed downward. For simplicity of the description, however, the former manner of channel rail fixation with the inlet opening 42 directed upward is illustrated in the drawings. The conduit 5 is disposed perpendicularly to the plurality of channel rails 4.

The main body 1 is made of a ferrous metal, nonferrous metal such as aluminum, nonmetal such as plastic, or a composite material of a metal and nonmetal. This material of the main body 1 is also true for the second and third modes of the present invention which will be discussed later.

The main body 1 consists of a retainer section 10 so curved as to fit the sectional form of the conduit. The retainer section 10 is so curved as to be in contact with an area of the conduit that is equivalent to at least 1/3 of the circumferential length thereof. The retainer section 10 has a foot section 11 extending obliquely downward from the curved retainer section 10, and engagement portions 13 provided at the lower end of the foot section 11 and which are to abut the lower ends 41 of the inlet-opening walls 40 of the channel rail 4. The engagement portions 13 are bent in this embodiment, but they are not limited to this form.

There is formed as bent at the lower portion of the curved retainer section 10 opposite to the foot section 11 a seat section 12 being horizontal or having an appropriate angle of inclination. The seat section 12 has a width smaller than the distance W₁ between the inner faces of the inlet-opening walls 40 of the channel rail 4, and has formed nearly in the center thereof a through-hole 120 larger in diameter than the screw 2. The seat section 12 has a pair of bent walls 121 formed at either lateral edges thereof to hold the buckle 3. The angle of the bent lateral walls 121 with respect to the seat section 12 may not necessarily be a right angle. Also the bent lateral walls 121 may not necessarily be any continuous ones.

The screw 2 is inserted in the through-hole 120 in the seat section 12. The screw 2 is not limited to any specific type, but it may be an ordinary one having a head 20 at the upper end of a threaded body 21 thereof. As shown in Figs. 2 and 3, the screw 2 has provided above the first head 20 thereof as a smaller-diameter portion 22 which is to be broken when a predetermined tightening torque is reached, and a second head 23 above the portion 22.

In this embodiment, the second head 23 is a long stem which will project above the curved retainer section 10 when the first head 20 abuts the seat section 12, and it has provided atop thereof a flat portion 230 which is turned by using a pliers to apply a torque to the screw 2. Because of this arrangement, the screw 2 can be easily turned even in case the channel rails 4 are laid with smaller intervals, and the screw 2 is not applied with any torque larger than specified. In this embodiment, the threaded body 21 has a threadless neck portion 211 below which the thread is formed.

Similar to the main body 1, the buckle 3 is made of a ferrous metal, nonferrous metal such as aluminum, nonmetal such as plastic or a composite material of a metal and nonmetal by a selected method such as pressing, casting or injection molding. Otherwise, the buckle 3 may be made of a square pipe by shearing. These material and method of manufacture are also true for the second and third modes of the present invention which will be discussed later.

The buckle 3 is shown in Figs. 5 and 6. The buckle 3 has a total length L larger than the width W. As seen from Fig. 3, the width W is smaller than the distance W₁ between the inner faces of the inlet-opening walls 40. The length L is rather smaller than the distance W₂ between the inner faces of the flanges 4b of the channel rail 4 as will be discussed later with reference to Fig. 24. That is, the length L should preferably be equal to or somewhat (on the order of 1 to 3 mm) larger than the distance W₃ between the outer faces of the inlet-opening walls 40.

The buckle 3 has formed in the center thereof a screw hole 33 in which the threaded body 21 of the screw 2 is threaded. The buckle 3 has provided at either longitudinal end portion thereof abutments 31 which abut the lower ends 41 of the inlet-opening walls 40, and in addition it has provided at either lateral edges thereof a pair of projections 30 extending higher than the abutments 31.

The projections 30 are provided to block the buckle 3 against rotation within the channel rail 4, stop the rotation of the buckle 3 when positioned perpendicular to the length of the channel of the channel rail and guide the abutments 31 for vertical rise with the buckle being perpendicular to the channel of the channel rail. Further, when being walls, the projections 30 also cooperate with the bent lateral walls 121 of the seat section 12 to hold the buckle 3 directed as predetermined until the conduit clamp is used. This "holding" means keeping the buckle 3 secured to the seat section 12 with the buckle 3 oriented in a predetermined direction, namely, with its length being parallel with the inlet opening 40 of the channel rail 4 (in the first mode of the present invention) as shown in Figs. 3 and 4, until clamping of a conduit 5 is started. Especially, it is important in this first mode of the present invention that the buckle 3 is fixed while the rotational energy exerted from the elastic member 14 is being accumulated.

The two projections 30 have each a stop face 300 engageable on the inlet-opening wall 40, and these stop faces 300 are located in symmetry on the projections 30. In Fig. 5, the stop face 300 of the lower projection 30 lies at the left while the stop face 300 of the upper projection 30 is at the right.

The distance L₂ between the right and left first end faces 300 shown in Fig. 5 is set nearly equal to the distance W₁ between the inner faces of the inlet-opening walls 40. The distance L₁ from the stop face 300 to the free end is the effective length of the abutments 31.

The faces 301 opposite to stop faces 300 of the projections 30 (opposite stop faces) should not have any function of limiting the rotation. The distance L₃ from the opposite stop face 301 of each projection 30 to the free end must be longer than the distance L₁ from the stop face 300 to the free end, while the distance L₄ between the two end faces 301 must be shorter than the distance W₁ between the inner faces of the inlet-opening walls 40. This is required for rotating the buckle 3 through 90° from the position where it is parallel to the length of the channel rail 4. However, the opposite stop face 301 may not necessarily be at a right angle with respect to the abutment 31, but it may be inclined or curved.

In this first embodiment, the projections 30 are walls, and the buckle 3 has the sectional form of a channel perpendicular to the length thereof. The buckle 3 has formed by burring on a web 3a thereof a boss 330 in which a screw hole 33 is formed. The abutments 31 are formed as flanges 3b rising from either end of the web 3a to a relatively low height. The flange end faces are formed by the lower ends 41 of the inlet-opening walls 40.

Because of this arrangement, an effect of angulation or bending can be obtained to increase the strength of the abutments 31 so that the buckle 3 may be thin and a material may be selected from a wider range of materials. Since the abutments are narrow flange end faces, their bearing can be increased and they do not easily slip on the lower ends 41 of the inlet-opening walls 40. The projections 30 are formed by extending the flanges 3b further upward.

The projections 30 also serve as stopper against the rotation of the buckle 3. The projections must have such a height H that even when the buckle 3 is forcibly rotated with the stop faces 300 resting on the inlet-opening walls 40, the engagement is securely maintained. Also the projections 30 function to hold the buckle 3 with the elastic member 14 wound up until a conduit is clamped. So the height of the projections 30 should be such that they are sufficiently engageable on the bent lateral walls 121 of the seat section 12. In these respects, the height H must be equal to or larger than the height H₁ from the bottom face of the buckle 3 to the top of the flange, and preferably it should be 1.4 to 1.8 times larger than the height H₁ as shown in Fig. 6.

When the dimension W of the projections 30 in Fig. 5 equals to the distance between the inner faces of the bent lateral walls 121 of the seat section 12 in case the projections 30 are walls, the projections 30 may be rest by the friction on the bent lateral walls 121. However, to ensure that the buckle 3 can be positively held and disengaged with a relatively small force when the screw member is pushed even if there is some dimensional difference between these components, the seat section 12 according to the present invention has at least a protrusion 122 at either inner face of the bent lateral walls 121 thereof and a concavity 340 in the outer face of each projection 30. The protrusion 122 may be provided on the projection side and the concavity 340 be provided on the bent lateral wall side.

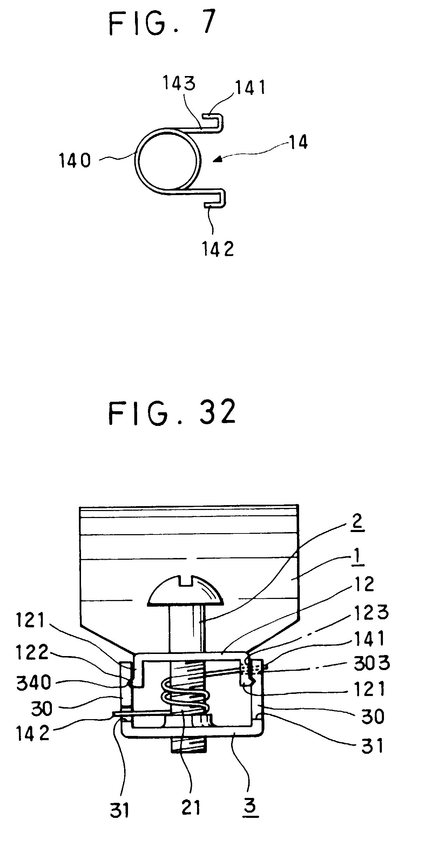

According to the first mode of the present invention, the elastic member 14 does not only raise the buckle 3 but also imparts a rotational force to the buckle 3. A typical one of the mechanical elements having such functions is a spring. The spring is not limited in shape and kind to any specific one. Generally, however, a cylindrical coil spring or torsion coil spring with a coil portion 140 having more than one turn is used as the spring 14 as shown in Figs. 1 and 7. For this elastic member, a tension spring may be used as will be described later. Thus the elastic member 14 will be referred to as "spring" hereafter.

The coil portion 140 has such a diameter that the threaded body 21 can be inserted through it, and one end 141 thereof contiguous from the coil portion 140 is hooked at a part of the seat section 12 while the other end 142 is at a part of the buckle 3.

The ends of coil portion 140 may be coupled by bonding, welding or the like. Otherwise, in case the buckle 3 is made of a plastic, the coil end may be formed integrally with the buckle 3. For a high efficiency of clamping in this embodiment, however, the one and other ends 141 and 142 made like a hook are hooked in a retention hole 123 formed in the seat section 12 and a retention cut 302 formed in the buckle 3, respectively. According to the present invention, the retention hole 123 in the seat section 12 is formed in one of the bent lateral walls 121 (right one as viewed from front). The hole should preferably be formed in a location near the end of the bent lateral wall 121 as shown in Fig. 4 in order to obtained an increased wind-up of the spring 14. Of course, the hole may be formed in the other bent lateral wall (left one as viewed from front). Furthermore, the hole may be formed in the main portion of the seat section 12 or at the boundary between the main portion and the bent lateral wall. The retention hole 123 may be a cut.

The retention cut 302 in the buckle 3 is provided in other place than the abutment 31. According to the present invention, a cut is formed in the lower portion of one of the projections 30, especially, in the opposite stop face 301 and it is used as the retention cut 302. Instead, the retention cut 302 may be a same one as in the seat section 12.

In this embodiment, one end 141 of the spring 14 is hooked at a position near the end of the bent lateral wall 121 as in the above. There is formed atop the projection 30 in which the retention cut 302 is provided a cut 303 through which a portion 143 extending from the end of the coil portion 140 is led to the bent lateral wall 121. However, the cut 303 is not always required depending upon the position where the one end 141 of the spring 14 is hooked or on the insertion depth of the buckle 3 into the seat section 12.

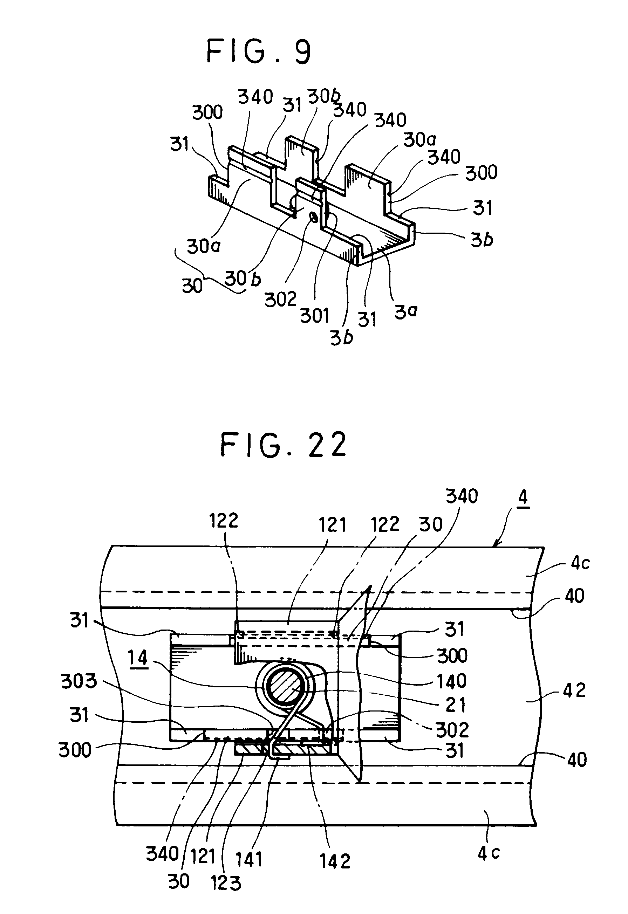

The one end 141 of the spring 14 in the position in Fig. 1 is hooked in the retention hole 123 in the seat section 12 while the other end 142 is in the retention cut 302 in the buckle 3. This is shown in Fig. 8. The buckle 3 is grasped by the hand of an assembling worker or a robot and forcibly rotated toward the smaller diameter portion (counterclockwise in this embodiment) of the coil portion 140 of the spring 14. The angle of rotation is more than 90°. In case the spring 14 is hooked when the buckle 3 is directed as shown in Fig. 1, the angle of rotation of the buckle 3 is on the order of 180°. When the projection 30 in which the retention cut 302 is provided becomes parallel to the bent lateral wall 121 having the retention hole 123, the projections 30 are forced between the bent lateral walls 121 of the seat section 12. Thus, the buckle 3 is securely held at the seat section 12 as shown in Figs. 3 and 4, and the spring 14 is kept wound up.

Fig. 9 shows another embodiment of the buckle 3 used in the present invention. In this embodiment, the projections 30 at either lateral edge are not each any single wall but are split having an intermediate space between them.

More particularly, each of the projections 30 consists of a first and second projections 30a and 30b. The stop face 300 is provided on the first projection 30a, while the opposite stop face 301 is on the second projection 30b. In this embodiment, there is formed in the second projection 30b a hole taking the role of the retention cut 302 for the other end 142 of the spring 14. Of course, the cut in the aforementioned embodiment may be used in place of such hole. Other structure is the same as in the previous embodiment.

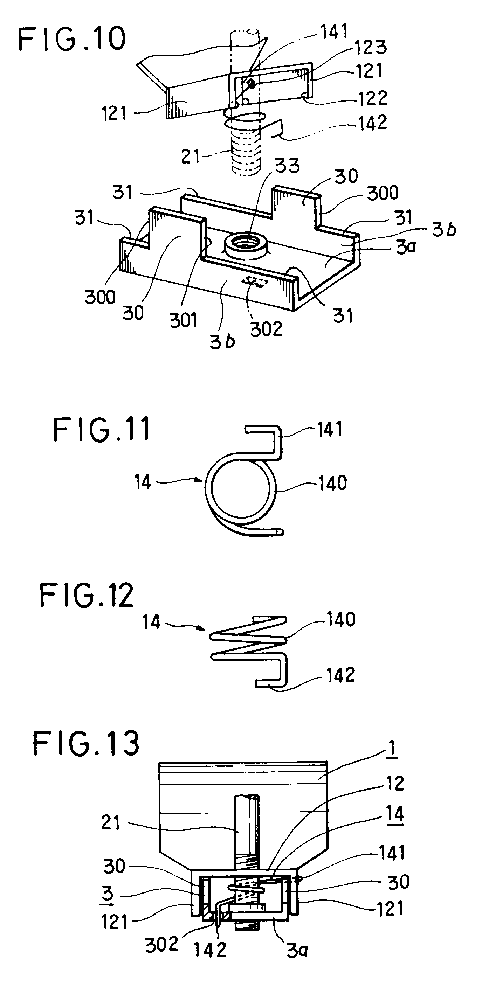

Figs. 10 to 13 show a yet another embodiment of the buckle 3. According to this embodiment, the projections 30 are walls and designed short. Therefore, the bent lateral walls 121 of the seat section 12 are designed higher than the projection 30 as shown in Fig. 13, and the buckle 3 is held with the flanges 3b set between the bent lateral walls 121. The bent lateral walls 121 may be appropriately bent inwardly to increase the grasping force of the bent lateral walls 121. Also, it is of course, there may be formed in the flanges 3b concavities as described in the previous embodiment and in which the protrusions 122 of the bent lateral walls 121 are fitted.

In this embodiment, the retention hole 302 is formed as a hole in the web 3a. The spring 14 has the second end 142 thereof bent longitudinally as shown in Figs. 11 and 12 and which is hooked in the retention hole 302. The first end 141 of the spring 14 is bent laterally and engaged in the retention hole 123 in one of the bent lateral walls 121 of the seat section 12.

The angle of rotation for retaining the aforementioned buckle 3 on the seat section 12 has a relation with the number of turns of the coil portion 140 of the spring 14 as well. In case the coil portion 140 has a large number of turns, the coil portion 140 is held by means of the seat section 12 after winding up the spring by turning the buckle 3 to an angle of rotation of more than 180°, for example, to 270° .

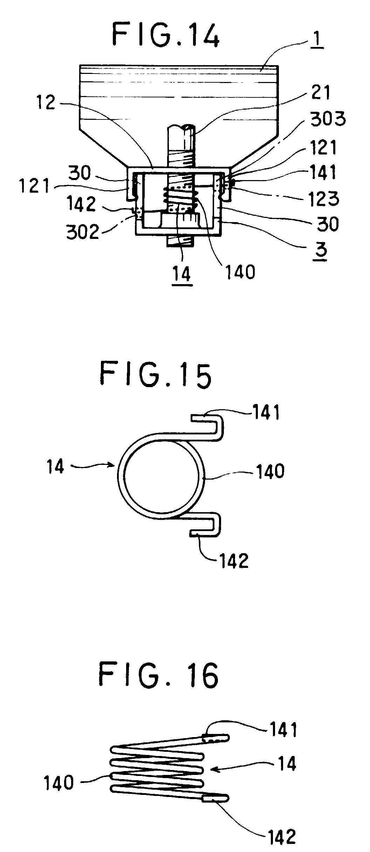

Figs. 14 to 16 show a spring 14 having a large number of turns, as an example. In case this spring 14 is used as combined with the buckle 3 shown in Figs. 5 and 6, the cut 303 is formed in the projection 30 opposite to the projection 30 having the retention hole 302 and the retention hole 123 in the seat section 12 is formed in the latter half of the bent lateral wall 121. The one end 141 of the spring 14 is hooked in the retention hole 123, while the other end 142 is in the retention hole 302 in the projection 30. In this condition, the buckle 3 is rotated about 270° and introduced into the seat section 12.

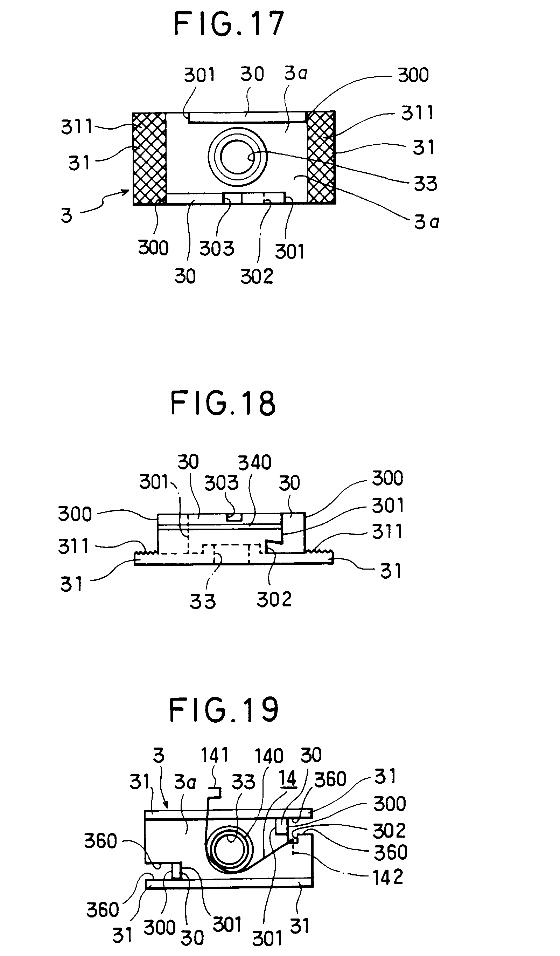

Figs. 17 and 18 show another variant of the buckle used in the conduit clamp according the first mode of the present invention. In this embodiment, the buckle 3 has the projections 30 formed as flange on the web 3a. In the embodiment shown in Figs. 17 and 18, the projections 30 may be divided and shortened. The abutments 31 are plate-shaped and have formed thereon frictional areas 311 by knurling or the like. Other constructions are similar to those in the embodiment shown in Figs. 5 and 6, so same elements as in the embodiment in Figs. 5 and 6 are indicated with same reference numerals and will be not discussed any more.

Fig. 19 shows a variant of the buckle 3 used in the conduit clamp according to the first mode of the present invention, in which the projections 30 are not any wall but a pawl-like projection. More particularly, there are formed in or near the lateral edge of the web 3a a set of two cuts 360 and a portion surrounded by these cuts 360 is bent upward. Also in this embodiment, the web 3a has formed therein a retention hole 302 in which the spring 14 is hooked at the other end thereof. The spring 14 may have the shape shown in Figs. 11 and 12, and the other constructions are similar to the aforementioned embodiment.

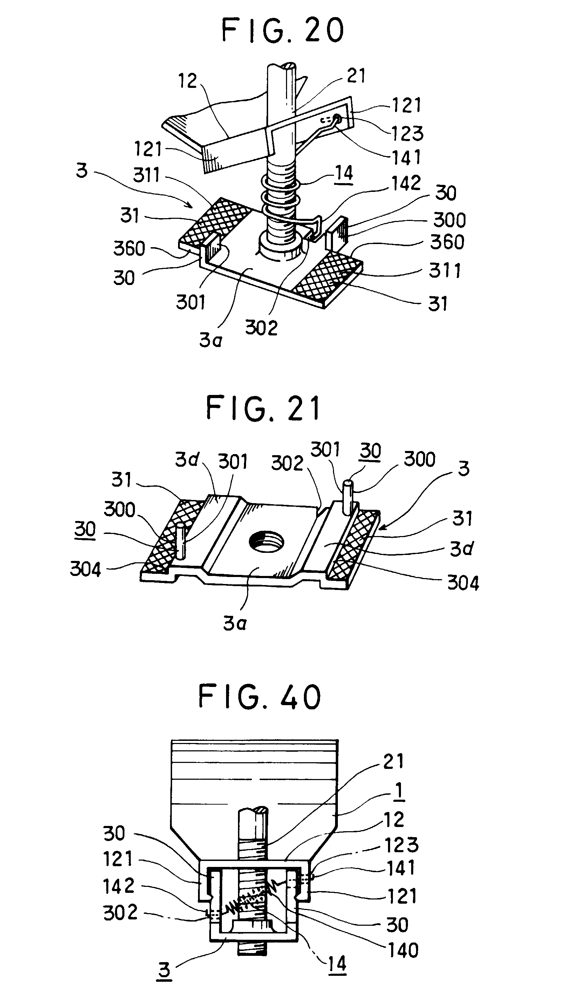

Fig. 20 shows a variant of the buckle 3 of which the projections 30 have the form of a pawl. The buckle 3 is like a plate, and have formed therein symmetrical cuts 360 parallel to the length of the web. A portion between the cuts 360 and the lateral edge of the web 3a is bent to form the projections 30. Further, a retention hole 302 is formed in a selected portion except for the abutments 31 (web edge near the projection in this embodiment) to fix the other end of the spring 14.

Fig. 21 shows a variant of the buckle 3 of which the projections are like a column. In this embodiment, the buckle 3 is a plate, but the web 3a has formed thereon ribs 3d extending in the direction of the width thereof and pins are studded in the end portions of the ribs 3d to form the projections 30. The studding may be freely done by press-fitting, riveting, screwing, welding or the like. The construction with such ribs 3d may also be applied to the buckle 3 shown in Fig. 20. The retention hole 302 is formed in the edge of the web 3a in this embodiment.

For holding any of the buckles 3 shown Figs. 10, 19, 20 and 21 to the seat section 12, the lateral bent walls 121 of the seat section 12 are desired higher or the lateral bent walls 12 are appropriately bent inward in addition to the increased height of the walls 121 to catch the web 3a at both sides extending in the direction thereof. In the embodiment shown in Fig. 10, the flanges 3b may have formed therein concavities in which the projections 122 are fitted.

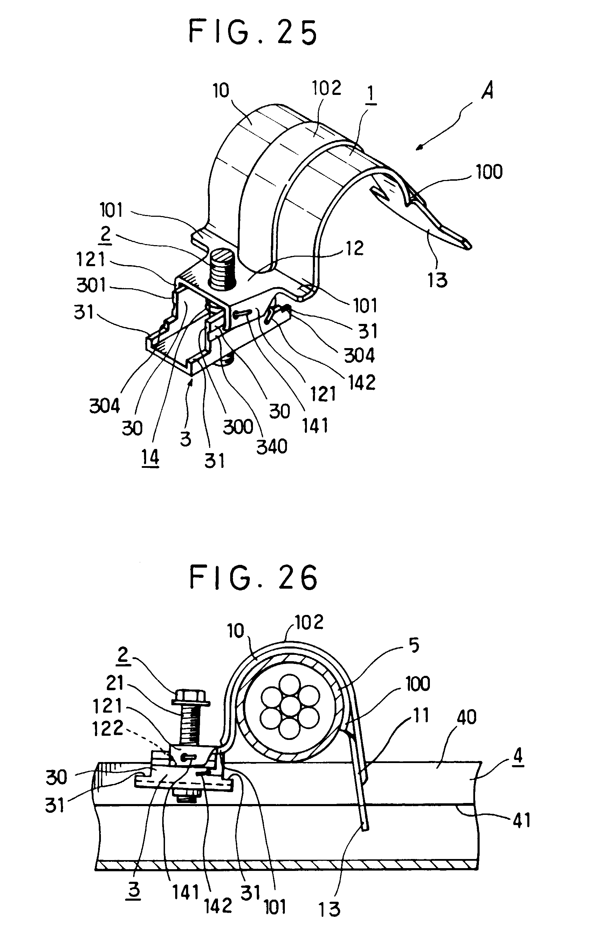

Figs. 25 to 31 show a second embodiment of the conduit clamp in the first mode of the present invention. The clamp A consists of a main body 1, a screw 2, a buckle 3 and a spring 14 as in the first embodiment.

The difference from the first embodiment is the structure of the main body 1. In the second embodiment, the beginning end portion of the retainer section extending to the right and left from the base of the foot section 11 is depressed inwardly of the retainer section to form the curved portions 100 having a curvature which fits that of the conduit 5.

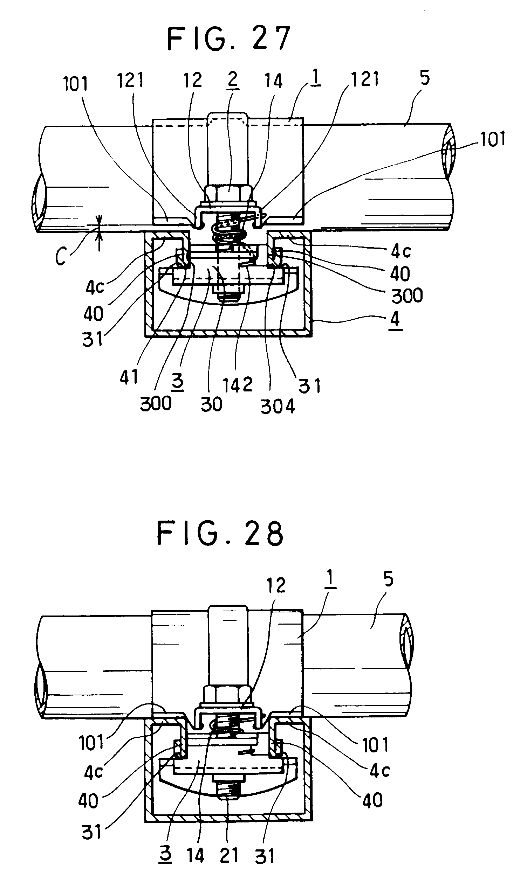

The portion connecting the retainer section 10 and a seat section 12 to each other has no obliquely-cut edges as shown in Figs. 1 and 2. More particularly, the retainer section 10 is extended downward keeping the width as it is to form flanges 101 which hang over forward nearly horizontally to the right and left from the base of the seat section 12 as shown in Figs. 25 and 27. The flanges 101 serve as stopper against fastening. The reference numeral 102 denotes a reinforcing rib formed extending from the base of the seat section 12 to the foot section 11.

The buckle 3 adopted in any of the aforementioned embodiments can be used for this embodiment. In this second embodiment, the buckle 3 has a similar structure to that shown in Figs. 5 and 6. However, the buckle 3 in this embodiment has a boss 330 formed, by burring, downward of the web 3a and in which a screw hole 33 is formed.

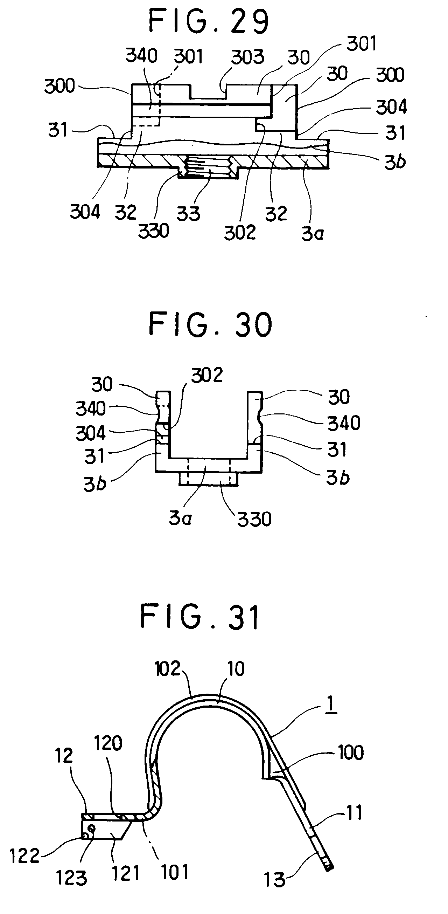

In the embodiment shown in Figs. 5 and 6, the abutment 31 opposite to the stop face 300 extends, keeping a constant height, to the lower end of the opposite stop face 301. In this second embodiment, however, as shown in Fig. 29, the height of each flange 3b is appropriately increased at a position adjacent to the opposite stop face 301, in other words, at a position where the effective abutment area of the abutment 31 begins (a position coincident with the stop face 300 at the opposite side, extending in the direction of width), thus forming a sub stop face 304. The two sub stop faces 304 are located in symmetry and extended by steps 32 which join the projections 30.

This structure is advantageous because the strength of the buckle is increased and the sub end face 304 rises at the abutment 31 opposite to the stop face 300 so the buckle 3 can be set precisely perpendicular to the channel of the channel rail 4.

Since the other elements are the same as those in the aforementioned embodiments, the same elements are denoted with the same reference numerals and will not be described any more.

The opposite stop faces 301 of the projections 30 in each of the aforementioned embodiments may be curved in the direction of thickness.

In each of the embodiments, the abutments 31 have not to always be horizontal but their free ends may be designed substantially higher, which will be effective because it prevents the abutments from slipping on the lower ends 41 of the inlet-opening walls 40 of the channel rail 4 and positively defines the clamping position.

In the above embodiment, the buckle 3 is fitted in the bent lateral walls 121 of the seat section 12, but the present invention is not limited to this arrangement. The buckle 3 may be fitted on the bent lateral walls 121, which is also included in the first mode of the present invention.

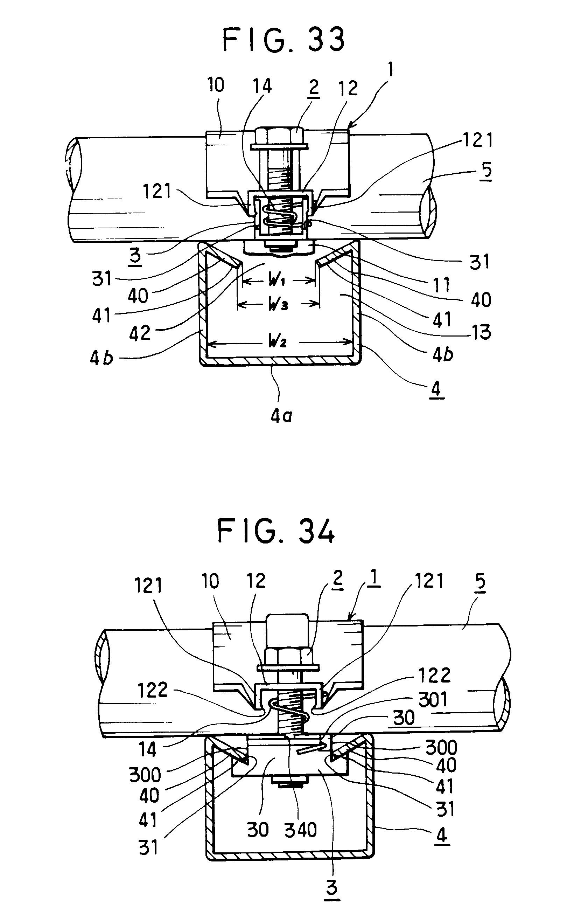

Fig. 32 shows the fitting of the buckle 3 on the bent lateral walls 121. In this embodiment, the web of the buckle 3 is widened and the projections 30 are fitted on the bent lateral walls 121 of the seat section 12. In this case, a protrusion or concavity 122 is provided on the inner face of the projections 30 and concavities or protrusions 340 are provided on the outer face of the bent lateral walls 121. In case one end 141 of the spring 14 is hooked on the lateral wall 121, a cut 303 should preferably be provided on the projection 30.

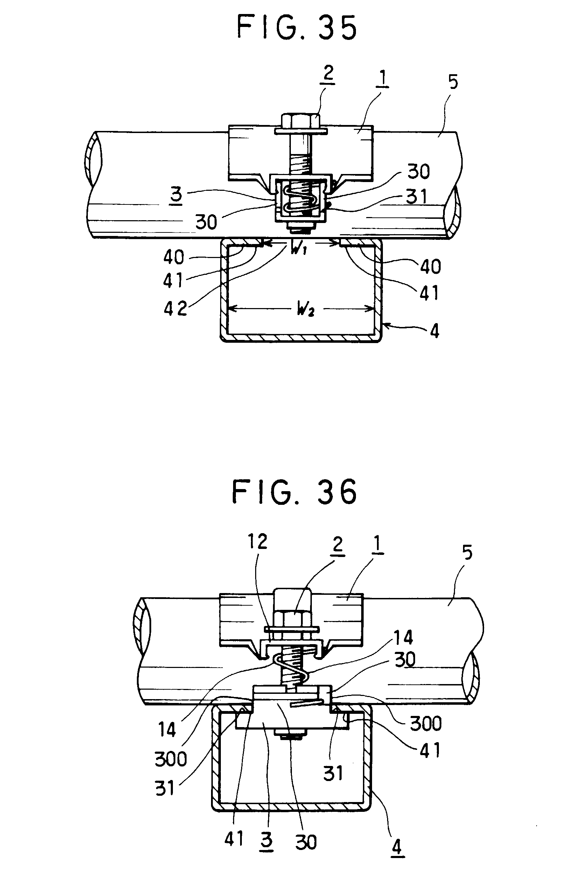

The conduit clamp according to the first mode of the present invention is not applicable only to a type of channel rail 4 of which the inlet-opening walls 40 droop vertically, but also to any other types. Figs. 33 and 34 show a channel rail 4 of which the inlet-opening walls 40 droop obliquely from the upper ends of the flanges 4b. Further Figs. 35 and 36 show a channel rail 4 of which the inlet-opening walls 40 extend horizontally from the upper ends of the flanges 4b. For the former type of the channel rail 4, a buckle 3 of which the abutments 31 are upwardly oblique as shown in Fig. 34 is optimally usable. However, the buckle 3 may have the horizontal abutments 31 as in each embodiment having been described above.

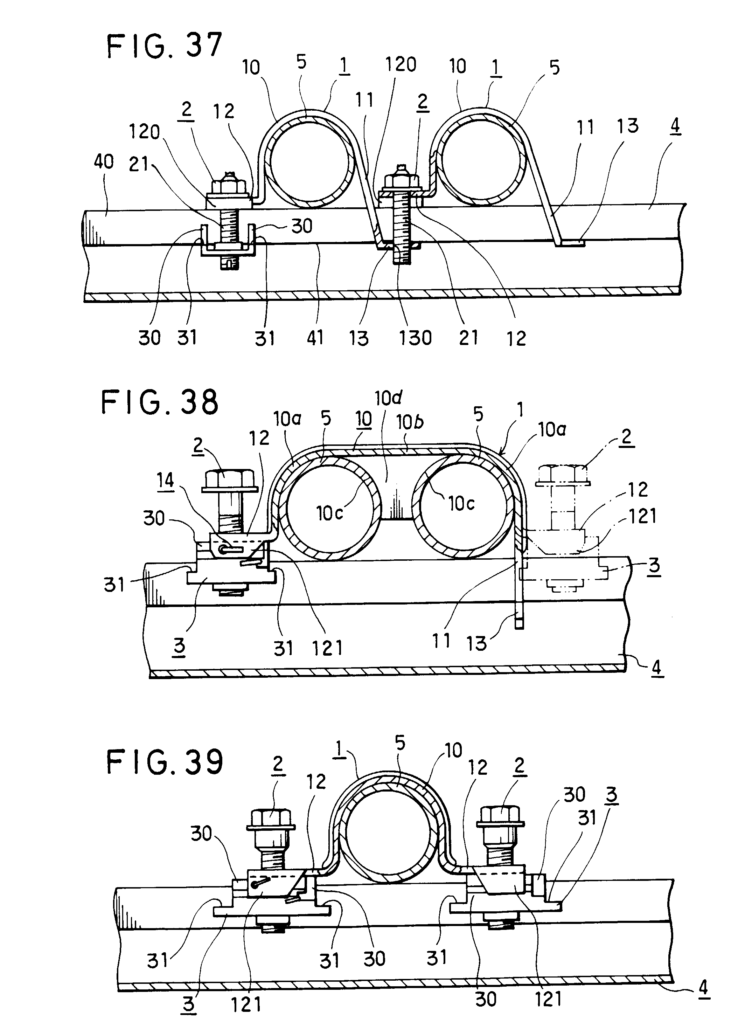

Figs. 37 to 39 show variants of the main body 1 of the conduit clamp according to the first mode of the present invention, and the use thereof. Fig. 37 shows an embodiment of the main body 1 in which the engagement portion 12 at the lower end of the foot section 11 is bent at a right angle with respect to the foot section 11 as shown in Fig. 1. In this example, a screw hole 130 is formed in the engagement portion 13. Thus, with the seat section 12 of a next main body 1 placed just above the engagement portion 13 and the screw member 3 driven in to the screw hole via the through hole in the seat section as shown in Fig. 37, a following conduit 5 can be fixed with a reduced space with respect to a preceding conduit 5 without using the buckle 3.

Fig. 38 shows a variant of the main body according to the present invention, in which a single main body can be used to fix two conduits 5 with a single main body 1. More particularly, the retainer section 10 is formed by curved portions 10a on either side thereof and straight portions 10b connecting the curved portions 10a, and there are provided on either side of the main body, extending in the direction of width thereof, included in the straight portions 10b, projections 10d having concave circular faces 10c contiguous from the sides of the main body. The two projections 10d on either side of the main body, extending in the direction of width thereof, are bent downward at a right angle with respect to the main body to form a pair of spacers. Thus, the circular faces 10c of each projection on either side, extending the direction of width, form together with the curved portion 10a to form a retainer section which fits the sectional form of the conduit 5. It should be noted that the number of the projections 10d is not limited to any special one. Two projections, formed longitudinaly of the straight portion 10b, permit to fix three conduits, and three permit to fix four conduits.

Fig. 39 shows a variant of the main body in which the foot section 11 is omitted, seat sections 12 are formed under both sides of the retainer section 10 and a screw member 2, buckle 3 and elastic member 14 specified above in connection with the aforementioned embodiments are disposed on the seat sections 12. This construction of the main body shown in Fig. 39 can be applied to the main body shown in Fig. 38, as will be understood from the indication with imaginary lines in Fig. 38.

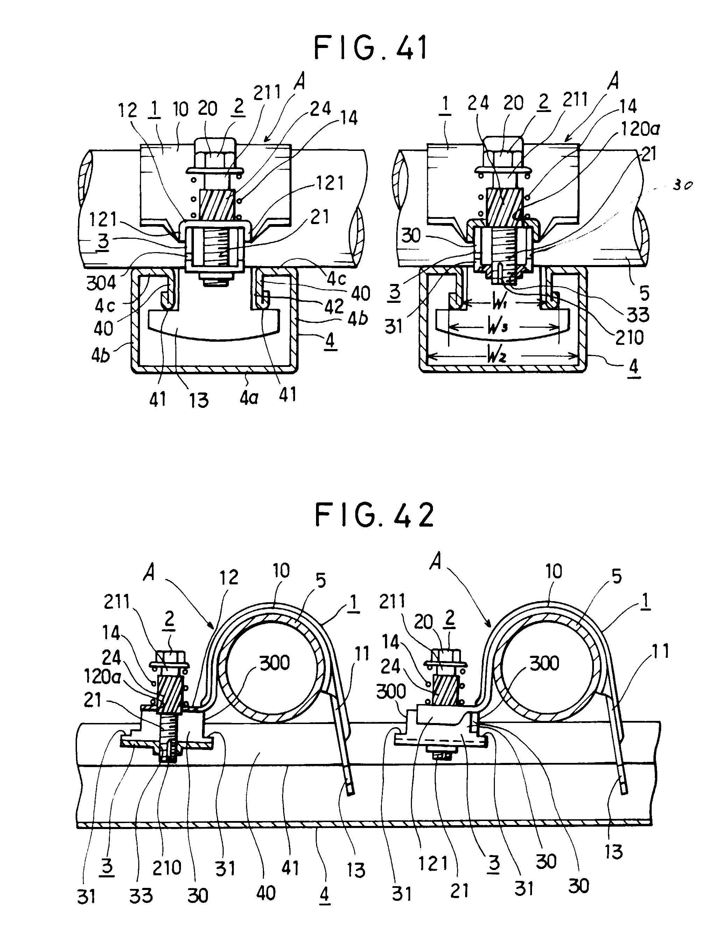

In any of the above embodiments, the position and configuration of the retention holes 123 and 302 as well as the shape of the spring 14 may be freely selected. Fig. 40 shows a variant of the elastic member 14 usable in the conduit clamp according to the first mode of the present invention. The elastic member shown in Fig. 40 is a tension spring of which the coil portion 140 is wound up along the threaded body 21. For use of the tension spring as the elastic member, the position and configuration of the retention holes 123 and 303 having been explained in connection with the aforementioned embodiments are selected.

If the contact of the spring 14 with the threaded body is possible in each of the embodiments, a tube made of a plastic or the like is applied on the outer circumference of the coil portion of the spring 14, a tube is put or a film of a resin is applied to an area except for the effective length of tightening of the threaded body 21, or the headless portion is lengthened.

### Second mode (see Figs. 41 to 62)

Figs. 41 to 47 show the first embodiment in the second mode of the conduit clamp according to the present invention. In Fig. 41, the reference A indicates generally a conduit clamp according to the second mode of the present invention. The conduit clamp A consists of a main body 1, screw member 2, buckle 3 and an elastic member 14 which lifts the buckle 3. The reference numerals 4 and 5 denote a channel rail and a conduit, respectively. As in the conduit clamp according to the first mode of the present invention, the channel rails 4 are disposed as spaced at a predetermined interval from each other and in parallel with each other, and suspended by suspension bolts (not shown) from the ceiling, or directly fixed to the ceiling as inverted from the position shown in Fig. 41. The conduits 5 are placed on the channel rails 4 perpendicularly to the latter.

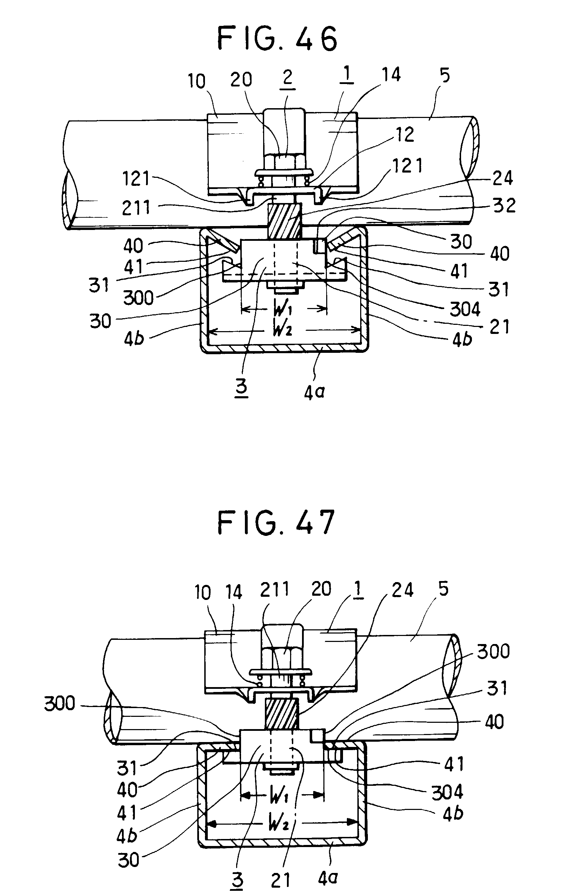

As seen from Figs. 41 and 42, the inlet-opening walls 40 of the channel rail 4 droop vertically and define an inlet opening 42 of which the width W₁ is smaller than the distance W₂ between the inner walls of the flanges. The channel rails 4 to which the conduit clamp according to the second mode of the present invention can be applied are not limited to this example, but include all those of which the inlet-opening walls 40 droop obliquely from the tops of the flanges 4b as shown in Fig. 46 and those of which the inlet-opening walls 40 extend horizontally from the tops of the flanges 4b as shown in Fig. 47.

The main body 1 has a retainer section 10 of which the profile corresponds to the sectional form of the conduit 5. In this embodiment, since the conduit 5 has a circular sectional form, the retainer section 10 is so curved as to be in contact with more than at least 1/3 of the circumferential length of the conduit 5. The main body 1 has a foot section 11 extending downward from the retainer section 10 and there is provided as extending from the lower portion of the foot section 11 a portion 13 which engages the lower ends of the inlet-opening walls 40 of the rail member 4. The engagement portion 12 is extended straight from the foot section 11 in this embodiment.

The retainer section 10 has formed as bent at the lower portion thereof a seat section 12 being horizontal or having an appropriate gradient. The seat section 12 may be a flat plate, but for an increased strength thereof and for positive holding by the buckle 3, it has lateral bent walls 121 on either side extending in the direction of width. The lateral walls may not necessarily droop vertically from the seat section.

In the conduit clamp according to the second mode of the present invention, the screw member 2 has a threadless neck portion 211 formed under the head 20 thereof, and there is formed between the threadless neck portion 211 and the threaded body 21 a rotation lead section 24 which cooperates with the seat section 12 to provide a clockwise rotation through about 90° when the screw member 2 is pushed in the axial direction thereof. In this embodiment, the rotation lead section 24 is a cylindrical wheel or the like having a plurality of teeth of a large lead disposed on the circumferential surface of a cylinder of which the diameter is larger than that of the threaded body 21. More particularly, the rotation lead section 24 may be a large-lead screw, multi-thread worm or the like.

The seat section 12 has formed in the middle thereof a guide hole 120a which fits the sectional form of the rotation lead section 24. In this embodiment, the guide hole 120a has an internal gear-like profile.

It is desirable that when the screw member 2 is pushed axially and rotated by the rotation lead section 24 and guide hole 120a, the buckle 3 will not be rotated independently. For this purpose, the engagement of the screw is enhanced, a recess 210 parallel to the axis is formed in the lower surface of the threaded body 21 or the buckle 3 is lightly secured provisionally with an adhesive agent.

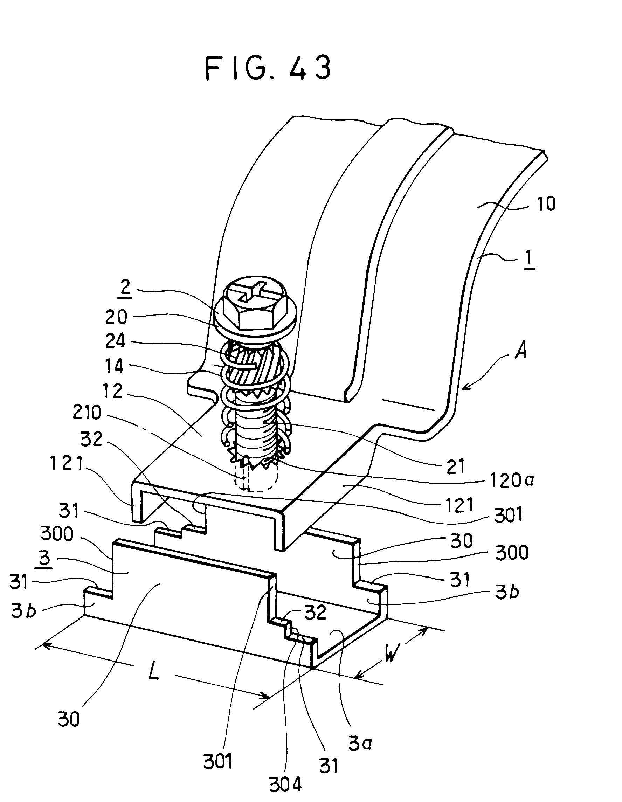

The buckle 3 has a similar configuration to that in the conduit clamp according to the first mode of the invention. Namely, its length L is larger than the width W as shown in Fig. 43. More particularly, the width W is smaller than the distance W₁ between the inner faces of the inlet-opening walls 40 shown in Fig. 43, and the length L is smaller than than the distance W₂ between the inner walls of the rail member 4 and equal to or a little larger than the distance W₃ between the outer walls of the inlet-opening walls 40 even in case the conduit clamp is used with a channel rail of which the inlet-opening walls 40 droop vertically.

The buckle 3 has formed in the middle thereof a screw hole 33 in which the threaded body 21 of the screw member 2 is driven and on either longitudinal side abutments 31 which engage the lower ends 41 of the inlet-opening walls 40. Also there are provided on either side extending in the direction of width a pair of projections 30 which rise high above the abutments 31. The abutments 31 should preferably be inclined correspondingly to the gradient of the inlet-opening walls 40 when the conduit clamp is used with a channel rail 4 shown in Fig. 46.

When the buckle 3 becomes perpendicular to the inlet opening 42, the projections 30 abut the inlet-opening walls 40 and stop the buckle 3 from rotating. For this purpose, the projections 30 have provided on the diagonal lines thereof stop faces 300 which will abut the inlet-opening walls 40.

The elastic member 14 may be a cylinder made of urethane or the like, but generally it should be a compression spring and more preferably, it should be a conical spring. The elastic member 14 is fitted on the screw member 2 and supported at the lower end thereof by the seat section 12. The threaded body 21 is passed through the guide hole 120a in the seat section 12, and the screw member 2 and buckle 3 are assembled to each other by driving the threaded body 21 into the screw hole 33 in the buckle 3.

This assembling may be done by pressing the screw member 2 axially against the action of the elastic member 14, driving the threaded body 21 into the screw hole 33 with the rotation lead section 24 fitted to a predetermined depth into the guide hole 120a and then releasing the screw member 2 from the pressed state. Since the screw member 2 is rotated 90° counterclockwise due to the cooperation of the rotation lead section 24 with the guide hole 120a, the buckle 3 is longitudinally parallel to the side wall of the seat section 12 and the projections 30 are raised under the action of the elastic member 14 up to a position where they abut the bottom of the seat section 12. In this state, the rotation lead section 24 must be fitted at least at the end thereof in the guide hole 120a. This fitting can be easily provided through selection of a resilience of the elastic member 14, setting a length of the rotation lead section 24 or setting a height of the projections 30.

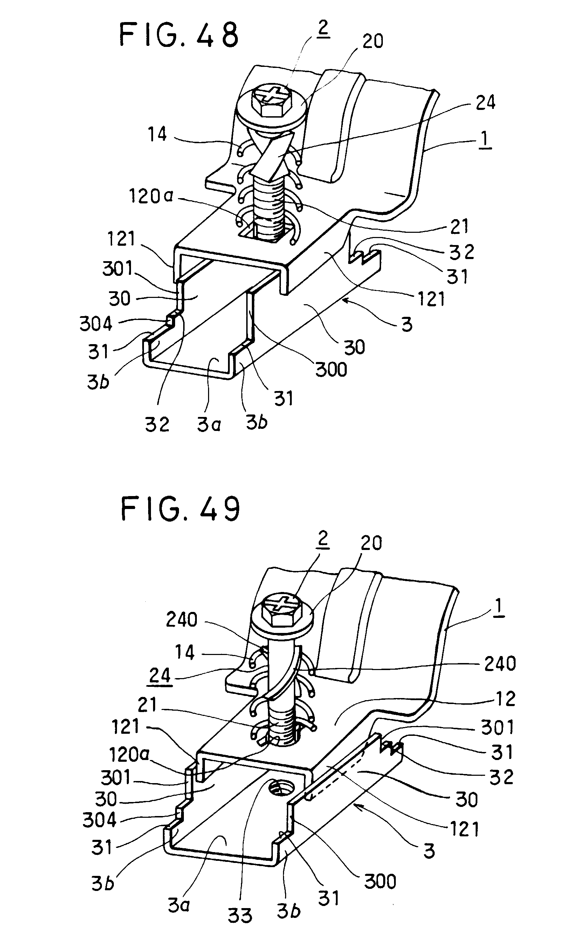

In the conduit clamp according to the second mode of the invention, the projections 30 may not necessarily fit closely the lateral bent walls 121 of the seat section 12, but a play may exist between them. Also the projections 30 may be fitted on the lateral bent walls 121 as shown in Fig. 49.

Fig. 48 shows a second embodiment in the second mode of the present invention. In this embodiment, the rotation lead section 24 is a torsion bar having a square section of which the area is larger than that of the threaded body 21, and the guide hole 120a has a square profile.

Fig. 49 shows a third embodiment in the second mode of the invention. In this embodiment, the rotation lead section 24 is a cylinder of which the sectional area is equal to or larger than that of the threaded body 21 and on which two spiral teeth 240 of a large lead are formed. The guide hole 120a is a circular hole having provided outside thereof two recesses 180° symmetrical with respect thereto.

Of course, the conduit clamps according to the second and third embodiments can be used with the channel rails shown in Figs. 41, 46 and 47.

The buckle 3 may be any one so long as it has the aforementioned basic configuration. The material of the buckle 3 is selected from among ferrous materials, aluminum, synthetic resin and the like according to an intended application.

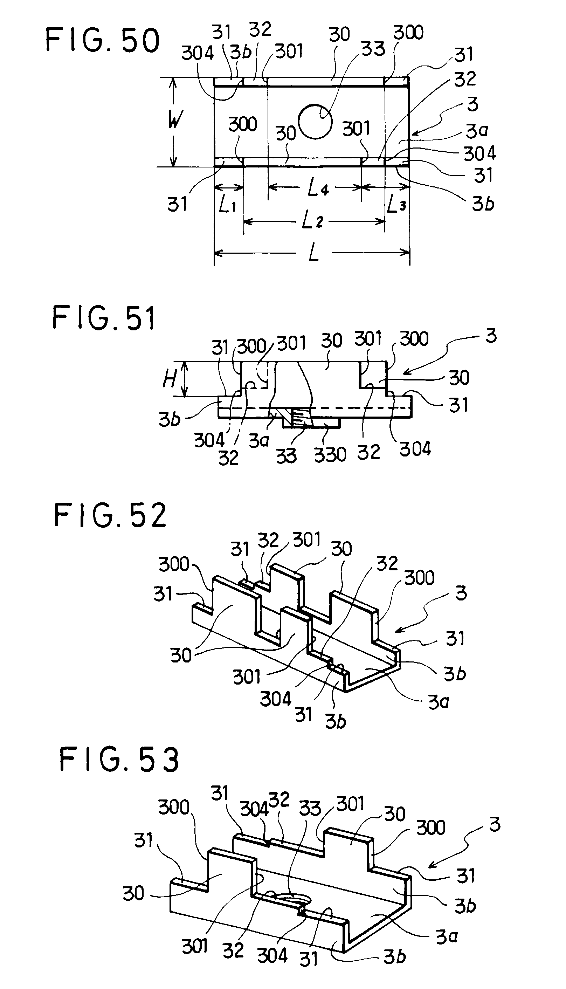

Figs. 50 and 51 shows the buckle 3 used in the conduit clamps shown in Figs. 41 to 47. The buckle 3 in this embodiment is similar to that used in the conduit clamp according to the first mode shown in Fig. 29. The section taken perpendicularly to the length of the buckle 3 has the form of a recess, and the buckle 3 has formed, by burring, in the web 3a thereof a boss 330 in which a screw hole is formed. The abutments 31 of the buckle 3 comprise flanges 3b rising to a relatively small height from the web 3a and of which the end faces are strongly pressed by the lower ends 41 of the inlet-opening walls 40. The buckle 3 shown in Fig. 29 can of course be used in the conduit clamp according to the second mode of the invention.

Figs. 52 and 53 show a variant of the buckle 3. In the embodiment shown in Fig. 52, the projections 30 are not a continuous wall but each is split into two pieces. In the embodiment shown in Fig. 53, the projections 30 are a short wall. These arrangements correspond to those shown in Figs. 9 and 10, and the arrangements in Figs. 9 and 10 may also be adopted in this variant of the buckle 3.

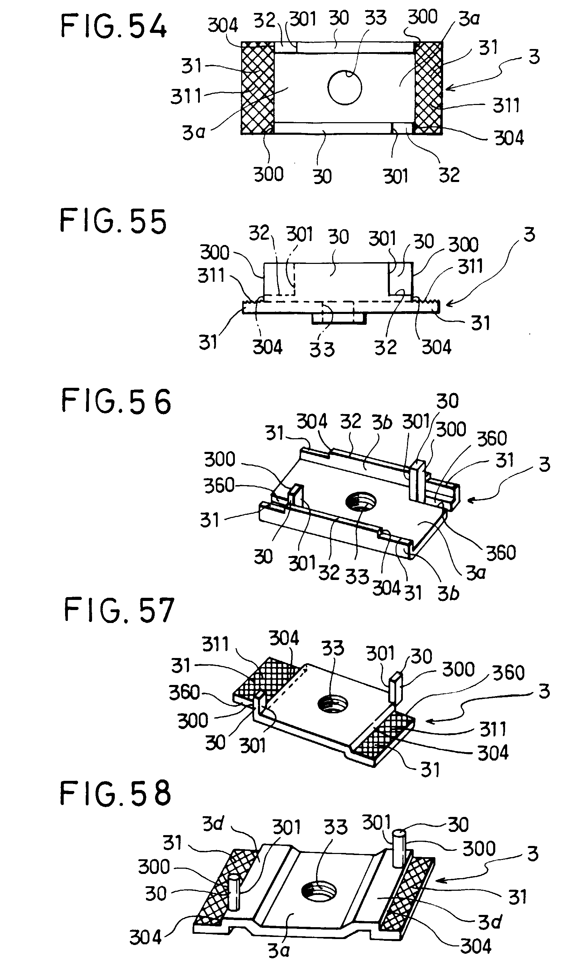

Figs. 54 and 55 show a variant of the buckle 3. In this embodiment, the abutments 31 is like a plate having formed thereon frictional areas 311 by knurling or the like. The buckle 3 has projections 30 formed, as flanges, on either side extending in the direction of width. This arrangement corresponds to that in Figs. 17 and 18 showing the conduit clamp according to the first mode of the invention. Other arrangements are the same as in the aforementioned first embodiment, and so the same elements as in the first embodiment are indicated with same reference numerals. They will not be discussed any more.

Figs. 56 to 58 show variants of the buckle 3. The buckle 3 shown in Fig. 56 has the general sectional form of a recess. Cuts 360 are formed in the lateral edge, or in a near area, of the web 3a and the portions inside the cuts 360 are bent upward to form pawl-like projections 30. This embodiment corresponds to that shown in Fig. 19. The buckle 3 shown in Fig. 57 has a general form of a trapezoid. Cuts 360 parallel to the length of the web 3a are formed in the lateral edge of the web 3a and the portions outside the cuts 360 are bent upward to form the pawl-like projections 30. This embodiment corresponds to that shown in Fig. 20. The embodiment shown in Fig. 20 may be designed to have the construction as shown in Fig. 57. Fig. 58 shows a buckle 3 which is like a plate having ribs 3d formed as extending in the direction of width on the web 3a to increase the strength thereof. Pins are studded in the end area of the ribs 3d to form projections 30. This embodiment corresponds to that shown in Fig. 21.

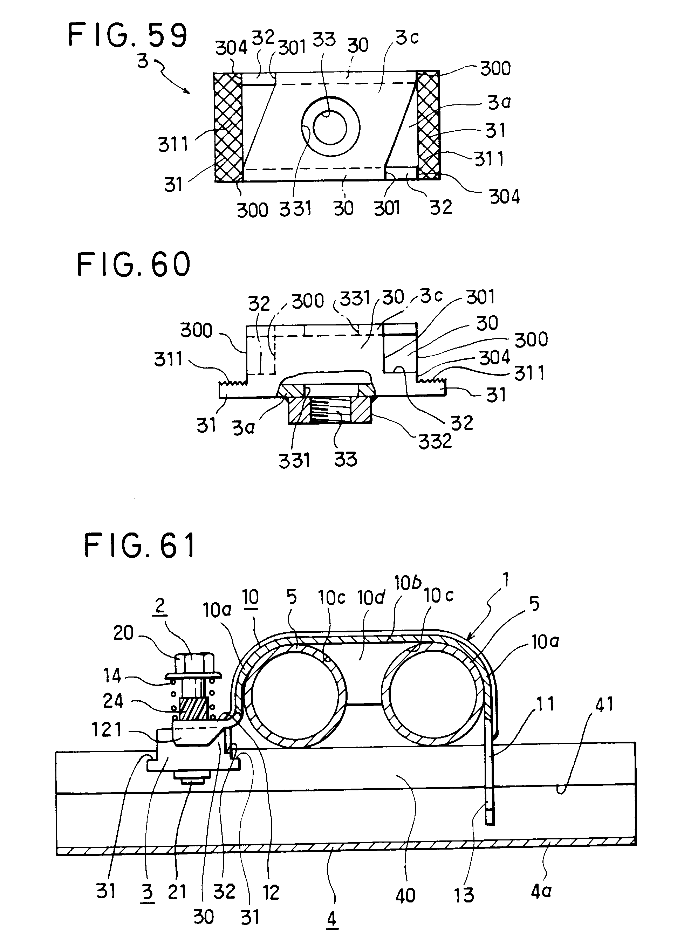

Figs. 59 and 60 show a variant of the buckle 3. The buckle 3 according to this embodiment has a sectional form of an rectangular tube and is laterally open. The abutments 31 are formed on the extensions of the web (bottom wall) 3a. The projections 30 are formed by the lateral walls of the rectangular tube. The top wall 3c and web 3a have concentrically formed therein holes 331, respectively. A nut 332 having a screw hole 33 is fixed to the web 3a. The hole 331 in top wall 3c should preferably have a diameter large enough to permit a free insertion and removal of the rotation lead section 24 of the screw member 2. However, the nut 332 may not be used for the screw hole 33 but the screw hole 33 may be formed directly in the web 3a.

This embodiment is advantageous in that the buckle 3 can be made by cutting a rectangular tube and has a larger rigidity. In particular, the abutments 31 can be made in the form of flanges as shown in Figs. 50 and 51 and thus their strength can be generally improved by setting the cut line of the lateral walls to a higher position than illustrated. In case the buckle 3 is made by pressing, it suffices to lengthen the portions for the flange of a blank by the length of the top wall, form a half-hole in the flange portions and bend the portions.

In each of the embodiments of the buckle 3, two stop faces 300 are symmetrically formed in the projections 30. The distance L₂ between the stop faces 300 is set nearly equal to the distance W₁ between the inner faces of the inlet-opening walls 40. The distance L₁ from each stop face 300 to the free end is the effective length of the abutment 31. The distance L₄ between the two opposite stop faces 301 should be smaller than the distance W₁ between the inner faces of the inlet-opening walls 40 in order to rotate the buckle 3 about 90° from a position where it is parallel to the length of the channel rail 4.

The height H of the projections 30 from the abutments 31 must be large enough for the stop faces 300 to abut the inlet-opening walls 40 and not to be off the latter.

In the buckles 3 shown in Figs. 50 to 56, 59 and 60, steps 32 are formed at the position where the effective clamping area of the abutments 31 begins from the opposite stop faces 301 (flush with the stop face 300 at the opposite side in the direction of width) and thus sub stoppers 304 are formed which are a little higher than the abutments 31. As shown in Figs. 50 to 55, the stops 32 are directly contiguous from the projections 30. In the buckle 3 shown in Fig. 57, the sub stop faces 304 a little higher than the abutments 31 are made by giving a trapozoidal form to the web itself. In the buckle 3 shown in Fig. 58, the stop faces 304 are formed by the ribs 3b.

In case the sub stop faces 304 are provided, the buckle 3 has an increased rigidity and the abutments 31 on either side extending in the direction of width have a same effective length. Thus the buckle 3 can be positively set perpendicular to the channel rail 5. Also, the buckle 3 can be prevented from inadvertently being turned counterclockwise and can be moved with the abutments 31 kept perpendicular to the channel rail 4 when the conduit clamp A is slid for adjusting the position of the conduit 5 with the buckle 3 provisionally fixed to the channel rail 3.

Fig. 61 shows a variant of the conduit clamp according to the second mode of the invention, which is adopted to fix two conduits 5 with a single main body. This conduit clamp has a same construction as the conduit clamp according to the first mode shown in Fig. 38. Same elements as in Fig. 38 are indicated with same reference numerals, and so will not be discussed any more.

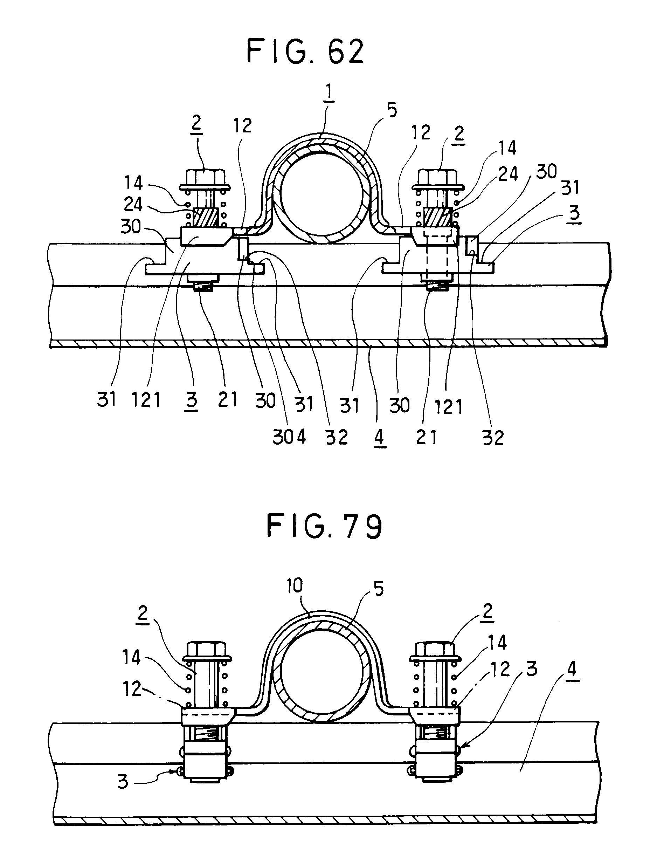

Fig. 62 a variant of the conduit clamp according to the second mode of the invention, in which seat sections 12 are formed under either side of the retainer section 10 and provided with a screw member 2, buckle 3 and elastic member 14 having the same respective constructions as previously mentioned.

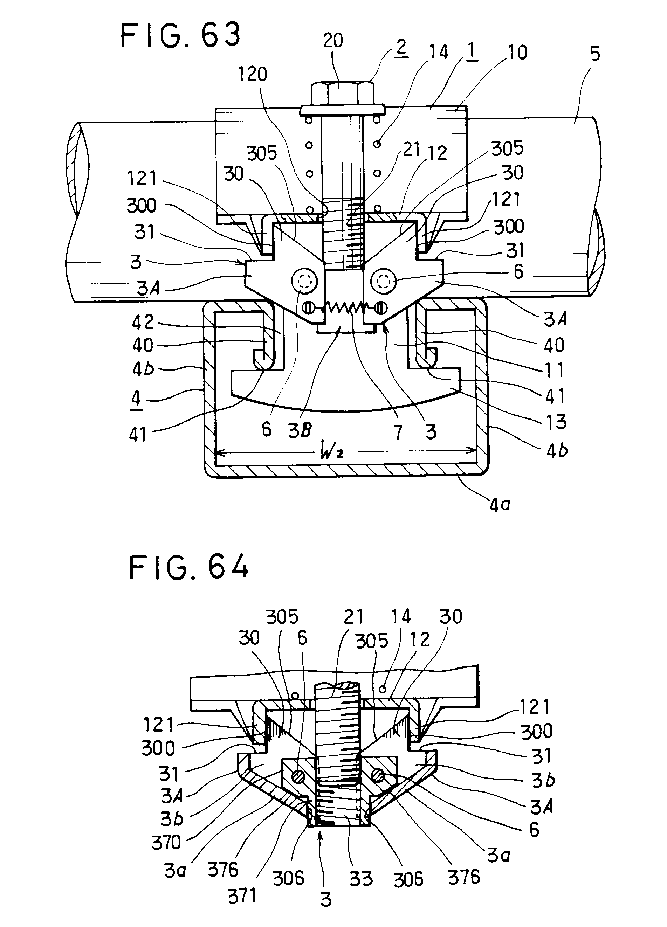

### Third mode (see Figs. 63 to 79)

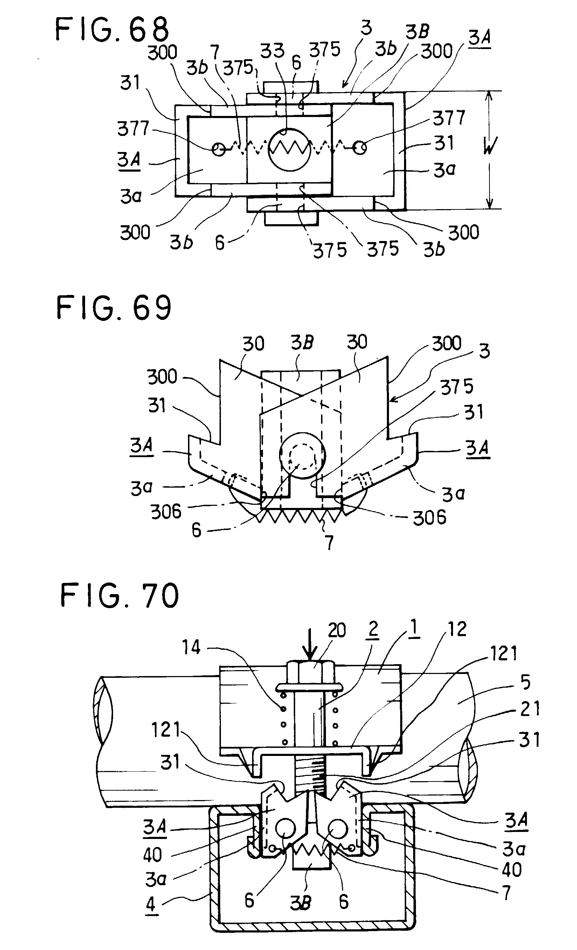

Figs. 63 to 79 show a conduit clamp according to a third mode of the invention. Figs. 63 to 65 show an embodiment, and Figs. 70 to 73 show the motions of the parts in the embodiment in operation.

The reference numeral 1 denotes a main body, 2 a screw member, and 14 an elastic member. The main body 1 has a retainer section 10 of which the shape fits the sectional form of a conduit 5 as in the previously- described conduit clamps according to the first and second modes of the invention. The retainer section 10 has formed at the lower portion thereof a seat section 12 projecting frontward and at the side opposite a foot section 11 having an engagement portion 13.

The seat section 12 has a through-hole 120 formed nearly in the middle thereof and lateral bent walls 121 on either side extending in the direction of width. The lateral bent walls 121 are provided to increase the rigidity and hold the buckle 3.

The screw member 2 has a head 20 and a threaded body 21 which is inserted in the through-hole 120 in the seat section 12 and screwed in a nut member of the buckle 3, which will be described later. The elastic member 14 should preferably be a compression cylindrical spring or conical spring, and it is interposed between the head 20 and seat section 12. The buckle 3 is so held on the seat section 12 as lifted under the action of the elastic member 14 as to be longitudinally perpendicular to the inlet opening 42 of the channel rail 4.

In the conduit clamp according to this third mode of the invention, the buckle 3 is adapted to rotate about the horizontal axis and open and close. More particularly, the buckle 3 has two fasteners 3A and a nut member 3B as shown in Figs. 63 to 65. In this embodiment, the two fasteners 3A are so supported on the nut member 3B by means of shafts 6 as to be oscillated about 90° about an axis perpendicular to the vertical axis.

The fasteners 3A are made of a material as in the conduit clamps according to the first and second modes of the invention. Each of the fasteners 3A have a web 3a and flanges 3b rising from either side of the web 3a. Each of the fasteners 3A has the sectional form of a groove open at least at the top and rear thereof as shown in Figs. 63 and 64.

The flanges 3b has formed thereon portions 31 which abut the lower ends 41 of the inlet-opening walls 40 of the channel rail 4, and there are formed near the abutments 31 projections 30 having stop faces 300 which can abut the inlet-opening walls 40 of the channel rail 4. The projections 30 should be high enough for the abutments 31 to be able to abut the inlet-opening walls 40 when passing by the lower ends 41 of the inlet-opening walls 40 as shown in Fig. 70, and the portions at the back of the top of the stop faces 300 are down-slopes 305. This is intended to permit the flanges of the fasteners 3A to close without collision when pushed from the state shown in Fig. 63.

For smooth closing of the fastener flanges from the setting in the inlet opening 42 of the channel rail 4, the web 3a is inclined at an angle with which it is nearly parallel to the down-slope 305 and the upper end thereof is a wall reaching the abutment 31. This wall effectively reinforces the abutment. The lower end 306 of the web 3a is terminated short of the rear end of the flange 3b.

The nut member 3B has a head portion 370 having a sectional form of a laterally long rectangle, and a foot portion 371 having a same width as the head portion 370 and of which the sectional area decreases only laterally. Namely, it has nearly a T-form as viewed from front. The head portion 370 has provided on the bottom thereof slopes 376 of which the angle fits the webs 3a.

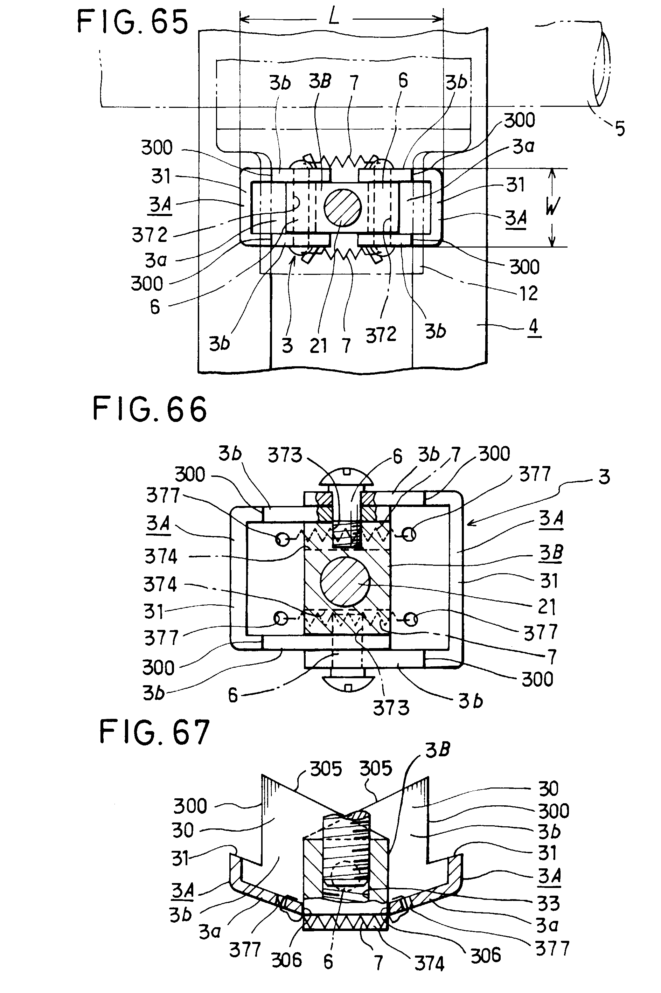

The nut member 3B has formed in the center thereof a screw hole 33 in which the threaded body 21 of the screw member 2 is screwed, and lateral holes 372 are formed in the head portions 370 on the opposite sides of the screw hole 33. As shown in Fig. 65, the fasteners 3A are symmetrically fitted in the nut member 3B through a rear opening. The fasteners 3A are assembled to the nut member 3B by setting holes previously formed in predetermined positions in the flanges 3b to the lateral holes 372 and passing shafts 6 through the lateral holes 372.

In this embodiment, the shafts 6 are prevented from coming out by calking or riveting. However, this come-out prevention is not limited to such calking, but can be accomplished by any other various ways such as use of an E-ring or the like proved effective for prevention of rotary shaft come-out.

In this assembled condition, the web 3a of the fastener 3A is engaged at the lower end 306 thereof to the side face of the foot portion 371. Thus, the maximum opening angle of the fasteners 3A is restricted so that the distance between the ends of the fasteners 3A when opened to the maximum extent is the length L of the fastener 3A. The length L is larger than the distance W₁ between the inner faces of the inlet-opening walls 40 (width of the inlet opening 42) and smaller than the distance W₂ between the inner faces of the flanges of the channel rail 4. The width W of the fasteners 3A should preferably be equal to or smaller than the length of the seat section 12.

It should be noted that the nut member 3B may have the form of a rectangular block extended to a length of the head portion 370 with the foot portion 371 omitted. In this case, the web 3a should be shorter to retreat the lower end.

The fasteners 3A should preferably be always slightly open so that they can be positively opened from the closed state. For this purpose, the mass of the abutments 31 of the fasteners 3A should be increased. This can be attained by adding a weight or increasing the wall thickness of the upper end of the inclining portion of the web 3a.

In this embodiment, the lower portions of the fasteners 3A are pulled by two elastic members 7. The elastic members 7 may be for example a tension spring, of which both the ends are fixed to the flange face below the installed position of the shafts 6. The tension spring may be fixed in any way, for example, by welding. In this embodiment, however, a portion of the flange 3b is lanced and bent upward, to which the tension spring is hooked at the end thereof. Instead, a small hole may be formed in the flange, and the tension spring may be hooked at the end thereof to that hole.

Figs. 66 and 67 show a variant of the buckle 3. In this embodiment, the right and left fasteners 3A are different in width from each other, and commonly use one point for fulcrum.

The fasteners 3A are combined with each other so that the flanges 3b overlap each other, and the narrow flanges 3b face the nut member 3B. The nut member 3B has formed therein lateral screw holes 373 so as to be perpendicular to an internal thread 33. The shafts 6 through the fasteners 3A are screwed in these lateral screw holes 373.

Further in this embodiment, the elastic member 7 is a tension spring and connects the webs 3 to each other. More particularly, the nut member 3B has formed on the bottom thereof cuts 374 extending perpendicularly to the threaded body, and the elastic members 7 are disposed in the cuts 374 and fixed at both ends thereof to the webs 3a in a selected manner. In this embodiment, there are formed small holes 377 in the webs 3a for fixing the elastic members 7, in which the elastic members 7 are hooked at both ends thereof.

For limiting the opening angle, the lower ends 306 of the web 3a are caused to abut the side face of the nut member 3B as in the aforementioned embodiments.

Figs. 68 and 69 show a variant of the buckle 3. Also in this embodiment, the right and left fasteners 3A are different in width from each other and commonly use one point for fulcrum. The differences from other aforementioned variants are: the nut member 3B has shafts 6 with come-out preventive projections, the flanges 3b of the fasteners 3A have formed therein recesses 375 having a width nearly equal to the diameter of the shafts 6, and the fasteners 3A are assembled to the nut member 3B by fitting the shafts 6 into the recesses 375, respectively.

This embodiment uses a single elastic member 7, which is extended between the webs 3a so as to traverse beneath the screw hole 33. In this case, the nut member 3B has an increased height so that the threaded body 21, when tightened, will not touch the elastic member 7.

The combination between the shaft with come-out preventive projection and the recess shown in Figs. 68 and 69 is also applicable to the embodiments shown in Figs. 63 to 65.

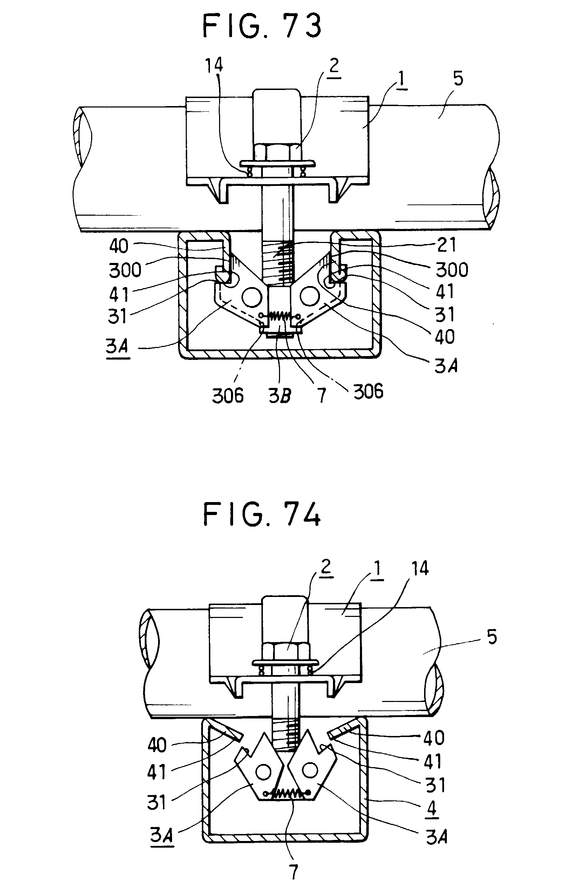

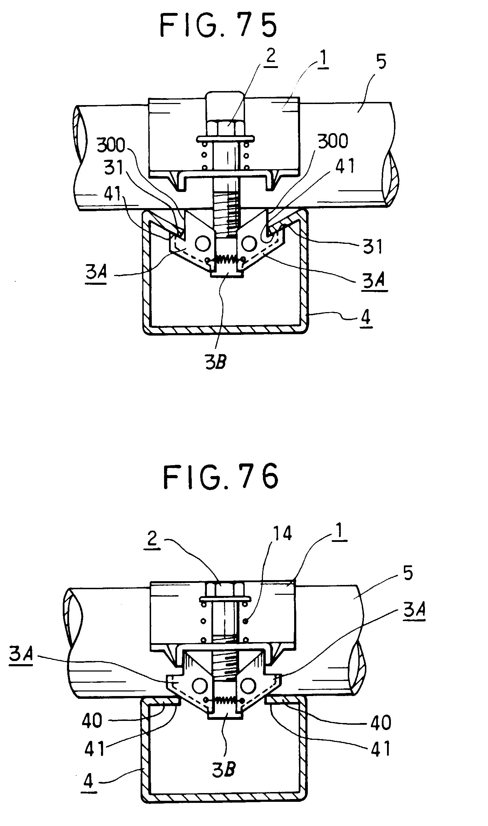

Figs. 74 and 75 show an application of the third mode of the invention to a channel rail 4 of which the inlet-opening walls 40 droop obliquely. Fig. 76 shows an embodiment applied to a channel rail 4 of which the inlet-opening walls 40 are horizontal. In case of the application shown in Figs. 74 and 75, the abutments 31 should preferably have an angulation which corresponds to the inclination of the inlet-opening walls 40.

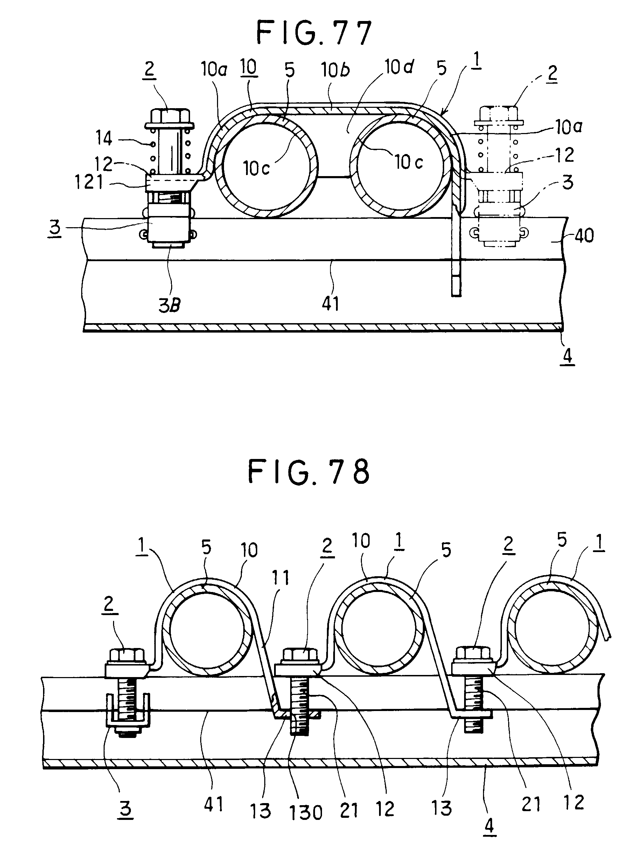

Fig. 77 shows the clamping of a plurality of conduits 5 with the buckle 3 according to the second mode of the invention. The main body 1 is the same as that in Fig. 61 provided that the seat section 12 has a through-hole, not the guide hole, formed therein. Therefore, same elements as in Fig. 61 are indicated with same reference numerals, and will not discussed any more.

Fig. 78 shows the clamping of a plurality of conduits with a single conduit clamp according to the second or third mode of the invention. The main unit 1 according to the first mode shown in Fig. 37 is used in the manner of clamping. No further description will be made here. Fig. 79 shows an embodiment in which there are before and after the retainer section 12 seat sections 12 to which the buckle 3, screw member 2 and elastic member 14 are assembled. This arrangement can be also applicable to the embodiment shown in Fig. 39.

### OPERATION

How to use the conduit clamp according to the present invention and how it functions will be described herebelow:

### First mode

First, the assembling of the conduit clamp A will be explained taking the first embodiment as example. The explanation begins with the exploded condition shown in Fig. 1. One end 141 of the spring 14 is hooked into the retention hole 123 in the bent lateral wall 121 of the seat section 12 of the main body 1, the threaded body 21 of the screw 2 is inserted into the through-hole 120 in the seat section 12 and through the coil portion 140 of the spring 14, and further the threaded body 21 is screwed into the screw hole 33 in the buckle 3.

The extent of screwing is set so that when the screw 2 is pushed until the screw head 20 abuts the seat section 12, the abutments 31 come to a position a little below the lower ends 41 of the inlet-opening walls 40 of the channel rail 4.

Next, the other end 142 of the spring 14 is hooked in the cut 302 formed in the projection 30 of the buckle 3. This condition is shown in Fig. 8. The buckle 3 has the length directed nearly parallel to the bent lateral walls 121 of the seat section 12. From the condition in Fig. 8, the buckle 3 is pushed up toward the seat section 12 while being rotated about 180° counterclockwise. The projections 30 of the buckle 3 enter between the bent lateral walls 121 and the protrusions 122 are fitted into the concavities 340. Thus the buckle 3 is securely held there. At the same time, the spring 14 is kept wound up. The buckle 3 is assembled to the main body 1 and the screw 2 projects largely above from the seat section 12.

For clamping the conduit 5, the foot section 11 is put into the channel rail 4 through the inlet opening 42 and the engagement portion 13 is engaged on the inlet-opening walls 40.

The retainer section 10 of the main body 1 is put on the conduit 5 previously disposed on the channel rail 4. This condition is shown in Figs. 3, 4 and 24. The buckle 3 takes a position in the inlet opening 42 as held on the seat section 12 of the main body 1. In the above procedure, the buckle 3 is so short that it does not reach the inside of the retainer section 10. Therefore, the conduit 5 can be easily and efficiently set in the main body 1 while the length of the buckle 3 is being kept parallel to the inlet opening 42.

Next, the screw member 2 is pushed downward. The buckle 3 is disengaged from the bent lateral walls 121 of the seat section 12, and is lowered in the inlet opening 42 while being suspended from the threaded body 21 of the screw 2, until the head 20 of the screw 2 abuts the seat section 12.

The projections 30 of the buckle 3 are lowered as guided on the bent lateral walls 121. The moment the upper end of the projections 30 leaves the bent lateral walls 121, the spring 14 having so far been wound up returns from its twisted state and thus restores its initial condition. The other end 142 of the spring 14 is hooked in the retention hole 302 in the buckle 3. Thus, the buckle 3 falls while being connected with the spring 14, and during this fall, the rotational energy accumulated in the spring 14 causes the buckle 3 to rotate clockwise about the threaded body 21 of the screw 2 from the condition shown in Fig. 22. This rotation is shown with the imaginary line in Fig. 23.

The distance L₄ between the opposite stop faces 301 of the projections 30 is shorter than the distance W₁ between the inner faces of the inlet-opening walls 40, while the distance L₂ between the stop faces 300 of the projections 30 is nearly equal to the distance W₁ between the inner faces of the inlet-opening walls 40.

Therefore, when the buckle 3 has been rotated about 90° from the state in Fig. 22, the two first end faces 300 in symmetry abut the inlet-opening walls 40, respectively, as indicated with solid line in Fig. 23. Thus, the buckle 3 is securely stopped at 90° from rotating, and the abutments 31 are set parallel to the lower ends 41 of the inlet-opening walls 40. The stop faces 300 click when they abut the inlet-opening walls 40. With this clicking, it is possible to instantaneously know when the buckle 3 is set in place.

Since the one end 141 of the spring 14 is hooked in the retention hole 123 in the seat section 12, the buckle 3 having rotated 90° as in the above is pulled upward. Thus, the abutments 31 resiliently abut the lower ends 41 of the inlet-opening walls 40 as shown in Fig. 24, resulting in a provisional clamping of the conduit 5, and the primary step of clamping is complete. In this condition, the stop faces 300 work well to limit the buckle 3 against rotation so that the abutments 31 will neither rotate clockwise nor counterclockwise even when the screw member 2 is touched by hand. Thus the abutments 31 can move only longitudinally of the inlet-opening walls 40. Therefore, by moving the conduit 5 longitudinally of the channel rail 4, the position of the conduit 5 can be adjusted easily.

Here the conduit 5 is correctly positioned and the secondary step of clamping starts. At this time, the screw 2 is tightened with a predetermined torque by using a selected tool. The buckle 3 is raised and the stop faces 300 of the projections 30 guide the inlet-opening walls 40. Therefore, the buckle 3 will not be rotated any longer. As the screw 2 is tightened, the buckle 3 will be raised vertically and the abutments 31 have a strong contact with the lower ends 41 of the inlet-opening walls 40. Thus, the main body 1 is pulled, and the conduit 5 is closely attached on the retainer section 10 and securely fixed to the channel rail 4. Since the spring 14 still keeps a little remainder of the rotation energy and so always applies the buckle 3 with a force which will rotate the buckle 3 counterclockwise and a force which will raise the buckle 3, the buckle 3 will not be loosened even if a vibration or the like is applied after the clamping. Thus, the conduit 5 can be kept stably clamped to the channel rail 4.

The above-mentioned operations and the behavior and action of the buckle 3 due to the operations are also true when the conduit clamp is used with the channel rails 4 shown in Figs. 33 to 36.

The features of the conduit clamp according to the first mode of the invention can be resumed as follows:
(1) A single pushing of the screw member 2 makes it possible to simultaneously lower the buckle 3, rotate it 90° and provisionally fix it. Therefore, with the conduit clamp according to the present invention, even a person not so skilled can easily clamp a conduit to a channel rail with no mistake. Thus, also in case conduits are to be clamped to channel rails 4 fixed with the inlet opening 42 directed downward, the worker can do this clamping work very easily without much fatigue which will result from an unnatural posture he takes.
(2) It is not necessary to turn the screw for shifting the buckle 3 from a position where it is parallel to the inlet opening 42 of the channel rail 4 to a position where it is perpendicular to the channel. The screw has to be tightened for fully clamping the conduit to the channel rail. Thus the necessary turning of the screw is extremely small, which is much contributed to a rapid and efficient work of clamping. This is the special feature found in this first mode of the invention. Assume, for example, that the previously-mentioned level adjustment of the buckle 3 has been done so that the abutments 31 are flush with the lower ends 41 of the inlet-opening walls 40 when the buckle is lowered. In this case, when the screw 2 is pushed, the buckle 3 is rotated 90° clockwise about the threaded body 21 of the screw 2 under the action of the spring member 14. Thus, the buckle 3 lowers over an extra distance for the angle of 90° along the threaded body 21. So there develops a gap due to which the abutments 31 can go under the lower ends 41 of the inlet-opening walls 40. Therefore, full clamping needs a minimum stroke. For example, when the thread pitch of the threaded body 21 is 1.0 mm, the full clamping can be completed only by tightening the screw 2 one full turn.
(3) The length of the buckle 3 is very short, namely, nearly equal to the distance W₃ between the outer faces of the inlet-opening walls 40, and the abutments 31 and the screw hole 33 are in proximity of each other in a same plane (web 3a), which ensures a high rigidity of the buckle 3. Also, when the buckle 3 has the sectional form of a groove or the webs 3a are provided with ribs 3d, the buckle 3 can have such a strength and rigidity that it sufficiently withstands the torque exerted by the screw member 2. The stop faces 300 of the projections 30 are in contact over the total height with the inlet-opening walls 40. Therefore, a strong torque applied will not cause the entire buckle 3 including the screw hole 33 to be deformed or distorted. So the buckle 3 according to the present invention permits a heavy clamping.
(4) Forming the abutments 31 by the flanges 3b as shown in Figs. 1, 9, 10, 19 and 29 is advantageous as follows. First, the abutments 31 can be made extremely strong by utilizing the effect of angulation or bending. Secondly, when the inlet-opening walls 40 of the channel rail 4 have the replications as shown in Fig. 3, there are formed in many cases as regularly spaced on the lower ends 41 of the inlet-opening walls 40 anti-slip recesses perpendicular to the length of the channel rail. In such case, the four narrow abutments 31 go into the anti-slip recesses and the buckle 3 is raised under the action of the spring 14 so that the anti-slipping is attained. Therefore, in case a conduit is clamped horizontally to channel rails laid on a vertical wall of a building, the provisional clamping and full clamping can be simply and positively done with the conduit clamp according to the present invention.

The use and basic function of the second embodiment in the first mode of the invention are the same as those of the first embodiment. In the second embodiment, a conduit clamp assembled as shown in Fig. 25 is applied to a channel rail 4 as shown in Fig. 26. Next, the screw member 2 is pushed. The buckle 3 is rotated under the action of the spring 14 while being lowered, and provisionally fixed to the channel rail 4 as shown in Fig. 27. By tightening the screw member 2 in this condition, the abutments 31 are put in strong contact with the lower ends 41 of the inlet-opening walls 40, namely, the full clamping is thus attained.

There are provided at the beginning end of the retainer section 10 of the main body 1 curved portions 100 directed inwardly of the line of inclination of the foot section 11. Thus, the curved portions 100 are put in close contact with the outer surface of the conduit 5 even in a condition of provisional clamping. When the full clamping is done as in the above, the seat section of the main body 1 is pulled downward, but the curved portions 100 are already in close contact with the outer surface of the conduit 5 and there is no play between the conduit 5 and the retainer section 10, so that the foot section 11 will not take a vertical position with the angle of inclination reduced. Therefore, no overload will apply to the seat section 12, so the seat section 12 will not be deformed as bent downward from the horizontal position. Namely, the buckle 3 will not be loosened at all, the conduit 5 is fixed very rigidly and can be kept permanently clamped.

In case the flanges 101 are provided on either side of the seat section 12, there is a clearance c between the flanges 101 and the flanges 4c of the channel rail 4 when yet in the state of provisional clamp. By tightening the screw in this condition for the full clamping, the main body 1 will be pulled downward until the flanges 101 have a contact with the top faces of the flanges 4c of the channel rail 4, as shown in Fig. 28. When the flanges 101 are in contact with the flanges 4c of the channel rail 4, the main body 1 will not be pulled down any longer even by further tightening the screw 2 to impart a tightening torque. Therefore, without using a screw of any special structure, it is possible to instantaneously know when the clamping is completed and also the completion of clamping can be known easily at a glance from outside. Even with the screw 2 tightened, the force of tightening is shut off by the flanges 4c so that no tension will be transmitted to the foot section 11. Thus, the foot section 11 is prevented from changing in angulation.

### Second mode

The conduit clamp according to the second mode of the present invention functions as will be described below.

The channel rails 4 are disposed at a predetermined interval between them with the inlet opening 42 directed upward or downward, as in the conduit clamp according to the first mode of the invention.

For clamping the conduit 5 with the conduit clamp according to this second mode, the foot section 11 is put into the channel rail 4 through the inlet opening 42 and the engagement portion 13 is engaged on the lower ends 41 of the inlet-opening walls 40. Then, the retainer section 10 is applied to the conduit 5 laid perpendicularly to the channel rail 4, as shown in Figs. 41 and 42. The buckle 3 is lifted by the elastic member 14 and held by the seat section 12 of the main body 1, and the rotation lead section 24 is engaged at the lower end thereof in the guide hole 120a in the seat section 12. Thus, the buckle 3 is longitudinally held exactly in parallel to the length of the channel rail 4. The buckle 3 is so short that it does not reach the inside the retainer section 10 as shown in Fig. 42. Therefore, when the retainer section 10 is applied to the conduit 5, the buckle 3 will not be any interference. The retainer section 10 can be applied to the conduit 5 by a single operation.

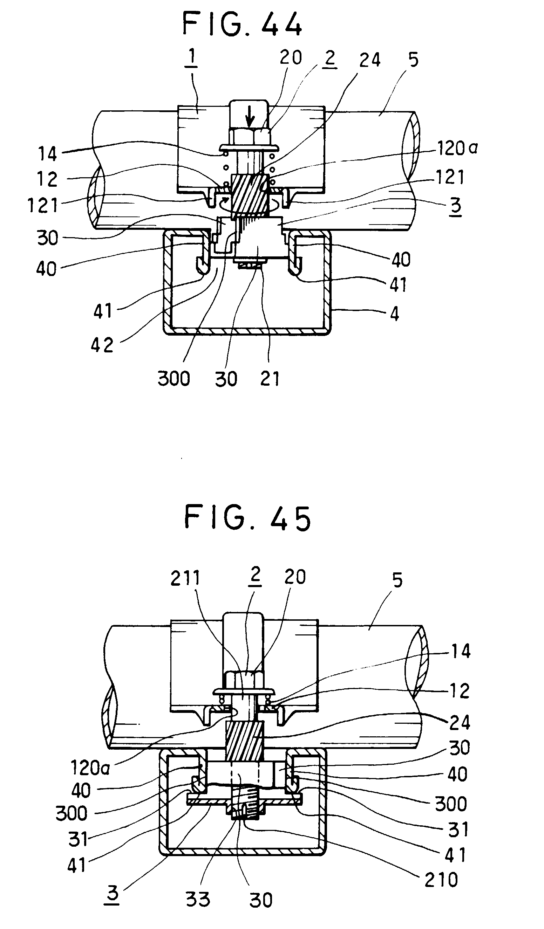

For provisional fixation, the screw member 2 is pushed axially. This pushing will press down the screw member 2 against the action of the elastic member 14 and thus the projections 30 of the buckle 3 leave from the lateral bent walls 121 of the seat section 12. When the screw member 2 falls, the rotation lead section 24 is activated and the screw member 2 rotates clockwise due to the relation with the guide hole 120a in the seat section 12. Thus the buckle 3 rotates clockwise along with the screw member 3 within the inlet opening 42 as shown in Fig. 44.

In the buckle 3, the distance L₄ between the opposite stop faces 301 is smaller than the distance W₁ between the inner faces of the inlet-opening walls 40 but the distance L₂ between the stop faces 300 is equal to that distance W₁.

Also the height of the rotation lead section 24 is a dimension necessary for rotation through 90°. So, as the screw member 2 rotates while further falling from the position shown in Fig. 44, the stop faces 300 positioned in symmetry gradually come near the inlet-opening walls 40. Simultaneously when the rotation lead section 24 leaves the guide hole 120a and the screw member 2 stops rotating, the stop faces 300 abut the inlet-opening walls 40 with clicking. Thus, the buckle 3 is stopped from rotating and the abutments 31 will be perpendicular to the lower ends 41 of the inlet-opening walls 40.

When the screw member 2 is released from the axially pushed state, it will be lifted under the action of the elastic member 14 as shown in Fig. 45, and thus the abutments 31 are in close contact with the lower ends 41 of the inlet-opening walls 50. This is the provisional fixation.

At this time, the sub stop face 304 lower the projection 30 abuts the inlet-opening wall 40 on the side of the opposite stop face. The sub stop face 304 is aligned with the stop face 300 of the projection at the opposite side. Thus, if the screw member 2 is touched erroneously by hand, the abutments 31 will neither rotate clockwise nor counterclockwise and will be set precisely parallel to the lower ends 41 of the inlet-opening walls 40. Therefore, the position of the conduit 5 can be freely adjusted by holding and moving it longitudinally of the channel rail 4. Since the abutments 31 are moved along the inlet-opening walls 40 while keeping the direction at this time, the adjustment can be done extremely easily and safely.

For full clamping after the conduit 5 is set in place, the screw member 2 is tightened with a predetermined torque from the state shown in Fig. 45. As the threadless neck portion 211 is positioned in the guide hole 120a in the seat section 12 and the diameter of the threadless neck portion 211 is smaller than that of the guide hole 120a, the threaded body 2, when turned, will enter the screw hole 33 in the buckle 3 so that the buckle 3 will rise and the abutments 31 are strongly clamped to the lower ends 41 of the inlet-opening walls 40. The main body 1 is pulled down, the conduit 5 gets in close contact with the retainer section 10 and securely fixed to the channel rail 4. The elastic member 14 will work as spring washer thereafter, so the conduit 5 will not loosened even if applied with a vibration or the like.

The use and function of the channel rails 4 shown in Figs. 46 and 47 are similar to those having been described above. In the embodiment shown in Fig. 62, it is not necessary to inset the foot section 11 into the channel rail 4. By pushing the screw members 2 from the illustrated position, the provisional fixation can be attained.

The conduit clamp according to the second mode of the invention shows the same features as those of the conduit clamp according to the first mode provided that the action of the spring 14 is utilized to reduce the necessary amount of screw turning.

### Third mode

The use and function of the conduit clamp according to the third mode of the invention will be discussed below.

As shown in Fig. 63, the foot section 11 of the main body 1 is inserted into the channel rail 4 and rests on the engagement portion 13, the conduit 5 is held by the retainer section 10, and the buckle 3 is set in the inlet opening of the channel rail 4. The buckle 3 is lifted by the elastic member 14 and the right and left fasteners 3A are held open with the stop faces 300 between the lateral bent walls 121 of the seat section 12. As shown in Fig. 65, since the buckle 3 has a width W smaller than the projecting length of the seat section 12, it can be easily applied onto the conduit 5. In this condition, the inclined webs 3a of the right and left fasteners 3A are in contact with the inlet-opening walls 40.

The provisional fixation is completed by pushing the screw member 2 axially as in the conduit clamps according to the first and second modes of the invention. Namely, by pushing down the screw member 2 against the action of the elastic member 14 from the position shown in Fig. 63, the thrust applied to the nut member 3B causes the right and left fasteners 3A to go down and leave the lateral bent walls 121 of the seat section 12.

Simultaneously, the webs 3a are forced by the inlet-opening walls 40 so that the fasteners 3A tilt about the shafts 6 inwardly against the action of the elastic members 7. As shown in Fig. 70, the fasteners 3A will thus fall while closing with the webs 3a being nearly in contact with the inlet-opening walls 40.

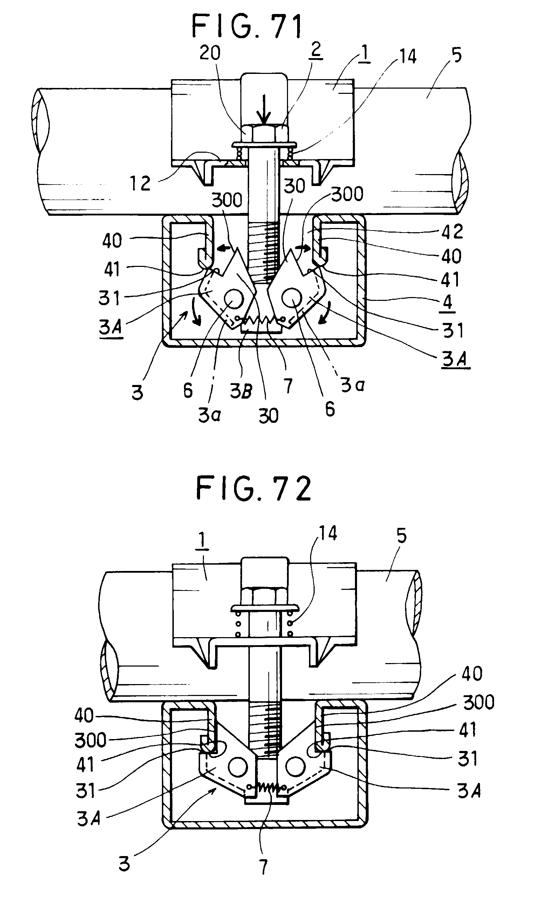

The screw member 2 is continuously pushed and the head 20 of the screw member 2 is pushed down to near the seat section 12. When the inclined portions of the webs 3a of the fasteners 3A pass by the lower ends 41 of the inlet-opening walls 40, they will be released from the closing action of the inlet-opening walls 40. Then, the fasteners 3A are rotated about the shafts 6 outwardly under the action of the elastic members 7 as shown in Fig. 71 and the abutments 31 pass by the lower ends 41 of the inlet-opening walls 40. There are provided adjacent to the fasteners 3A projections 30 higher than the latter and of which the radius of rotation is larger than that of the abutments 31. Thus, the stop faces 300 at the ends of the projections 30 rapidly approach the inlet-opening walls 40 as shown in Fig. 71. Simultaneously when the abutments 31 take horizontal position, the stop faces 300 abut the inlet-opening walls 40.

When the screw member 2 is released from the pushed state, it will be lifted by the elastic member 14 as shown in Fig. 72. At this time, the fasteners 3A are kept in contact with the inlet-opening walls 40 and so work as guide. Thus, the buckle 3 rises vertically and the abutments 31 get in close contact with the lower ends 41 of the inlet-opening walls 40. This is the provisional fixation. The fasteners 3A have a predetermined width W as shown in Fig. 65 and their stop faces 300 are spaced from each other with a predetermined interval and parallel to each other. Thus, the abutments 31 are kept precisely perpendicular to the lower ends 41 of the inlet-opening walls 40. Therefore, the position of the conduit 5 can be adjusted very easily.

By turning the screw member 2 after the position adjustment, the fasteners 3A are raised vertically as the threaded body 21 moves on so that the abutments 31 are strongly clamped to the lower ends 41 of the inlet-opening walls 40. At this time, the stop faces 300 and the inlet-opening walls abut each other and the lower ends 306 of the webs 3a abut the side face of the nut member 3B, so the fasteners 3A will not open more than the angle shown in Fig. 73.

In case the inlet-opening walls 40 of the channel rail 4 are inclined, the fasteners 3A are turned outwardly when the screw member 2 is pushed down to full extent, as shown in Fig. 74. When the screw member 2 is released from the pushed state, the provisional fixation as shown in Fig. 75 will result.

The conduit clamp according to this third mode shows the similar features to those in the second mode.

In the conduit clamps according to the first to third modes of the invention, in case the elastic member 14 shows a strong resilience or in case the conduit 5 is made of, for example, a relatively soft plastic or a bundle of cables, the conduit can be completely fixed by pushing the screw member 2 axially, which is also included in the present invention.

## Claims

1. A device for clamping a conduit (5) to a channel rail (4) composed of a web (4a), a pair of flanges (4b) provided at either side of the web, and top walls (4c) extending inwardly from the upper ends of the flanges in a manner as to form inlet opening walls (40) with faces defining an inlet opening (42) therebetween, said device comprising:
a main body (1) having a retainer section (10) of which the shape fits the sectional form of the conduit (5), and having a seat section (12) contiguous from the retainer section;
a buckle (3) having abutments (31) and stop faces (300) which can be positioned in a first position allowing the buckle to be inserted into said inlet opening (42), and then can be rotated into a second position wherein said abutments (31) come into a predetermined position under said inlet opening walls (40) for abutting these walls from below and wherein said stop faces (300) abut selected portions of the channel rail (4) for stopping further rotation;
a screw member (2) which has a head (20) at the upper end thereof and a body (21) penetrating said seat section (12) of said main body (1) and being threaded at the lower end thereof for engagement with a screw hole (33) in said buckle (3) to provide a means of drawing the buckle in the direction of the head (20) of the screw member (2) while the abutments (31) are in said second position,
**characterized in that:**
said seat section (12) is provided with means (121, 122) for holding the buckle (3) in the first position which allows the buckle to enter said inlet opening (42) when said screw member (2) is pushed down axially;
said buckle (3) and said screw member (2) are coupled with a mechanism (14; 24; 6, 7) responsive to the force of pushing down said screw member for moving said buckle down into the inlet opening (42) and automatically effecting rotation of said abutments (31) and stop faces (300) into said second position when said abutments (31) leave the inlet opening (42) at the lower side thereof,
said stop faces (300) are adapted to abut the inlet-opening defining faces of said inlet-opening walls (40) when coming into said second position.

2. A device as set forth in claim 1 for clamping a conduit (5) to a channel rail (4) perpendicularly to the latter, wherein:
the buckle (3) has a width W smaller than the distance W₁ between the faces defining the inlet opening (42) of the channel rail (4) and a length L larger than the distance W₁ but smaller than the distance W₂ between the inner faces of flanges;
the buckle (3) has provided in the middle thereof said screw hole (33), at either longitudinal end thereof said abutments (31) and at the portions thereof other than the abutments (31) a pair of projections (30) rising high above the abutments (31), having said stop faces (300);
the main body (1) has a foot section (11) with a portion (13) which engages the inlet-opening walls (40) of the channel rail (4), said seat section (12) extending frontward from the lower end of the retainer section (10) and being provided with lateral bent walls (121) which hold the buckle (3) so as to be longitudinally parallel to the inlet opening of the channel rail (4);
a spring (14) is disposed between the seat section (12) and buckle (3), hooked at one end (141) thereof at the seat section (12) and at the other end (142) at the buckle (3), the spring (14) being twisted to lift the buckle (3) and giving a rotation to the buckle (3) when the screw member (2) is pushed axially.

3. A device as set forth in Claim 1, wherein the seat section (12) has lateral bent walls (121) which hold the buckle (3), an elastic member (14) is provided between the seat section (12) and buckle (3) to couple them to each other, the elastic member (14) is wound up when the buckle (3) is turned through a predetermined angle and fitted between the lateral bent walls, and the elastic member (14) gives an energy of rotation to the buckle (3) when the buckle is released from the held state by pushing the screw member (2).

4. A device as set forth in Claim 3, wherein the elastic member (14) is a coil spring having a coil portion (140) in which a threaded body (21) of the screw member (2) is inserted, the coil spring being coupled at one end (141) thereof contiguous from the coil portion (140) thereof to the seat section (12) and at the other end (142) to a portion other than the abutments (31) of the buckle (3).

5. A device as set forth in Claim 3, wherein the elastic member (14) is a tension spring having a coil portion (140) spirally enclosing a threaded body (21) of the screw member (2), the tension spring being coupled at one end (141) thereof contiguous from the coil portion (140) thereof to the seat section (12) and at the other end (142) to a portion other than the abutments (31) of the buckle (3).

6. A device as set forth in Claim 4 or 5, wherein the spring (14) is coupled by welding, bonding or hooking.

7. A device as set fort in any one of claims 3 to 6, wherein the buckle (3) is fitted in between the lateral bent walls (121) of the seat section (12).

8. A device as set forth in any one of claims 3 to 7, wherein the buckle (3) is fitted on the lateral bent walls (121) of the seat section (12).

9. A device as set forth in any one of Claims 1 to 8, wherein the buckle (3) has a total length larger than the distance W₁ between the faces defining the inlet-opening (42) of the channel rail (4) but smaller than the distance W₂ between the inner faces of the flanges of the channel rail (4), the buckle (3) has provided at the longitudinal end thereof said abubments (31) and near the abutments (31) a pair of projections (30) extending higher than the abutments (31), and the projections (30) have symmetrical stop faces (300) which can abut said inlet-opening defining faces when the buckle (3) is turned.

10. A device as set forth in Claim 9, wherein the L₂ between the two stop faces (300) is nearly equal to the distance W₁ between the inlet-opening defining faces of the inlet-opening walls (40), the projections (30) have faces (301) at opposite sides to the stop faces (300), the distance L₃ from the opposite stop faces (301) to the free end of the buckle (3) is larger than the distance L₁ from the stop face (300) to the feed end of the buckle (3), and the distance L₄ between the two opposite stop faces (301) is smaller than the distance W₁.

11. A device as set forth in Claim 9, wherein the projections (30) in pair are walls.

12. A device as set forth in Claim 11, wherein the walls include split ones.

13. A device as set forth in Claim 9, wherein the projections (30) in pair are pawl-like ones.

14. A device as set forth in Claim 9, wherein the projections (30) in pair are columns.

15. A device as set forth in any one of Claims 9 to 14, wherein there is provided at the beginning end of the buckle (3) on the side of the opposite stop face (301) a sub stop face (304).

16. A device as set forth in Claim 11 or 12, wherein the lateral bent wall (121) of the seat section (12) has more than one protrusion (122) and the projection (30) has a concavity (340) in which the protrusion (121) is engaged.

17. A device as set forth in any one of Claims 9 to 16, wherein the buckle (3) has the sectional form of a groove defined by the web (3a) and flanges (3b) and the abutment (31) is formed on a flange (3b).

18. A device as set forth in claim 1 or any one of Claims 3 to 17, wherein the main body (1) has a foot section (11) contiguous from the retainer section (10) and the foot section (11) has formed at the base thereof a curved portion (100) which fits the curvature of the conduit (5).

19. A device as set forth in Claim 1, wherein the buckle (3) is lifted by an elastic member (14) interposed between the seat section (12) and the head (20) of the screw member (2), and the buckle (3) is turned through the cooperation between a rotation lead section (24) provided in the middle of the threaded body of the screw member (2) and a guide hole (120a) of the seat section (12).

20. A device as set forth in Claim 19, wherein the rotation lead section (24) is a gear or the like.

21. A device as set forth in Claim 19, wherein the rotation lead section (24) is a multiple-thread screw.

22. A device as set forth in Claim 19, wherein the rotation lead section (24) is a torsion bar having a polygonal section.

23. A device as set forth in Claim 19, wherein the elastic member (14) is a coil spring.

24. A device as set forth in Claim 19, wherein the buckle (3) has a total length larger than the distance W₁ between the faces defining the inlet-opening (42) of the channel rail (4) but smaller than the distance W₂ between the inner faces of the flanges of the channel rail (4), the buckle (3) has provided at the longitudinal end thereof said abutments (31) and near the abutments (31) a pair of projections (30) extending higher than the abutments (31), and the projections (30) have symmetrical stop faces (300) which can abut said inlet-opening defining faces when the buckle (3) is turned.

25. A device as set forth in Claim 24, the distance L₂ between the two stop faces (300) is nearly equal to the distance W₁ between the inlet-opening defining faces, the projections (30) has faces (301) at opposite sides to the stop faces (300), the distance L₃ from the opposite stop faces (301) to the free end of the buckle (3) is larger than the distance L₁ from the stop face (300) to the feed end of the buckle (3), and the distance L₄ between the two opposite stop faces (301) is smaller than the distance W₁.

26. A device as set forth in Claim 24, wherein the projections (30) in pair are walls.

27. A device as set forth in Claim 26, wherein the walls include split ones.

28. A device as set forth in Claim 24, wherein the projections (30) in pair are pawl-like ones.

29. A device as set forth in Claim 24, wherein the projections (30) in pair are columns.

30. A device as set forth in any one of Claims 24 to 29, wherein there is provided at the beginning end of the buckle (3) on the side of the opposite stop face (301) a sub stop face (304).

31. A device as set forth in any one of Claims 25 to 30, wherein the buckle (3) has the sectional form of a groove defined by the web (3a) and flanges (3b) and the abutment (31) is formed on a flange (3b).

32. A device as set forth in any of claims 19 to 31, wherein the main body (1) has a foot section (11) contiguous from the retainer section (10) and the foot section (11) has formed at the base thereof a curved portion (100) which fits the curvature of the conduit (5).

33. A device as set forth in Claim 1, wherein the buckle (3) consists of two fasteners (3A) which can oscillate about the horizontal axis, are held between lateral bent walls (121) of the seat section (12) as drawn by an elastic member (14) interposed between the head (20) of the screw member (2) and the seat section (12), the fasteners (3A) being closed once upon touching said faces defining the inlet opening (42) of the channel rail (4) while lowering, when the screw member (2) is pushed axially, and then rotated about the horizontal axis and opened so that the abutments (31) are set to abut the inlet-opening walls (40) from below.

34. A device as set forth in Claim 33, wherein the buckle (3) has provided in the center thereof a nut member (3B) to which the fasteners (3A) are coupled by means of a shaft (6), the fasteners (3A), when opened, have a length L smaller than the distance W₂ between the inner faces of the flanges of the channel rail (4), and the fasteners (3A) have stop faces (300) rising high above the abutments (31) and which can abut said faces defining the inlet opening (42).

35. A device as set forth in Claim 33 or 34, wherein the fasteners (3A) are forced by at least one elastic member (7) so as to always be open.

36. A device as set forth in any one of Claims 33 to 35, wherein each of the fasteners (3A) has the sectional form of a groove, flanges (3b) are supported in the nut member (3B) by means of the shaft (6) and the end of the web (3a) abuts the side face of the nut member (3B), so that the opening of the fasteners (3A) is limited.

37. A device as set forth in any of Claims 1 to 36, wherein the main body (1) is adapted to hold a plurality of conduits.

38. A device as set forth in Claim 37, wherein the retainer section (10) of the main body (1) has a curved portion (10a) on either side thereof and a straight portion (10b) connecting the curved portions (10a) and there is formed as bent on either side, extending in the direction of width, of the straight portion (10b) at least a set of projections (10d) having concave circular faces (10c).

39. A device as set forth in any one of Claims 1 to 17 or in any one of Claims 19 to 32 or in any one of Claims 33 to 38, wherein the seat section (12) is provided on either side of the retainer section (10).

40. A device as set forth in any one of Claims 1 to 39, wherein said faces defining the inlet opening of the channel rail (4) include a type drooping vertically, a type drooping obliquely and a horizontal type.

## Patentansprüche

1. Vorrichtung zum Klemmen eines Rohrs (5) an eine Kanalschiene (4), die gebildet ist aus einem Steg (4a), einem Paar an jeder Seite des Stegs vorgesehenen Flanschen (4b) und sich von den oberen Enden der Flansche in einer solchen Weise, daß sie Einlaßöffnungswände (40) mit eine Einlaßöffnung (42) dazwischen definierenden Flächen formen, sich von den oberen Enden der Flansche einwärts erstreckenden oberen Wänden (4c), wobei die Vorrichtung enthält:
einen Hauptkörper (1) mit einem Halteabschnitt (10), dessen Form an die Querschnittsform des Rohrs (5) angepaßt ist, und der einen mit dem Halteabschnitt zusammenhängenden Befestigungsabschnitt (12) aufweist;
eine Spange (3) mit Widerlagern (31) und Anschlagflächen (300), welche in einer ersten Position angeordnet werden können, die es gestattet, daß die Spange in die Einlaßöffnung (42) eingesetzt wird, und dann in eine zweite Position rotiert werden kann, wobei die Widerlager (31) in eine vorgegebene Position unter den Einlaßöffnungswänden (40) kommen, um an diese Wände von unten anzustoßen, und wobei die Anschlagflächen (300) an ausgewählte Bereiche der Kanalschiene (4) anstoßen, um eine weitere Rotation zu stoppen;
ein Schraubelement (2) welches an dem oberen Ende desselben einen Kopf (20) und einen in den Befestigungsabschnitt (12) des Hauptkörpers (1) eindringenden Körper (21) aufweist und an dem unteren Ende desselben zum Eingriff in ein Schraubloch (33) in der Spange (3) mit einem Gewinde versehen ist, so daß eine Einrichtung geschaffen wird, um die Spange in der Richtung des Kopfs (20) des Schraubelements (2) zu ziehen, während die Widerlager (31) in der zweiten Position sind,
**dadurch gekennzeichnet,** daß:
der Befestigungsabschnitt (12) mit einer Einrichtung (121, 122) zum Halten der Spange (3) in der ersten Position versehen ist, welche es gestattet, daß die Spange in die Einlaßöffnung (42) eintritt, wenn das Schraubelement (2) axial abwärts vorgeschoben wird;
die Spange (3) und das Schraubelement (2) mit einem Mechanismus (14; 24; 6, 7) gekoppelt sind, der auf die Kraft beim Vorschieben des Schraubelements anspricht, um die Spange abwärts in die Einlaßöffnung (42) zu bewegen und automatisch eine Rotation der Widerlager (31) und der Anschlagflächen (300) in die zweite Position zu bewirken, wenn die Widerlager (31) die Einlaßöffnung (42) an der unteren Seite derselben verlassen,
wobei die Anschlagflächen (300) dazu vorgesehen sind, an die die Einlaßöffnung definierenden Flächen der Einlaßöffnungswände (40) anzustoßen, wenn sie in die zweite Position kommen.

2. Vorrichtung nach Anspruch 1 zum Klemmen eines Rohrs (5) an eine Kanalschiene (4) senkrecht zu der letzteren, bei der:
die Spange (3) eine Breite W hat, die kleiner ist als die Entfernung W₁ zwischen den die Einlaßöffnung (42) der Kanalschiene (4) definierenden Flächen, und eine Länge L, die größer ist als die Entfernung W₁, aber kleiner als die Entfernung W₂ zwischen den inneren Flächen der Flansche;
die Spange (3) in deren Mitte mit dem Schraubloch (33), an jedem longitudinalen Ende derselben mit den Widerlagern (31), und an deren von den Widerlagern (31) verschiedenen Bereichen mit einem Paar von hoch über die Widerlager (31) ansteigenden Vorsprüngen (30), die die Anschlagflächen (300) aufweisen, versehen ist;
der Hauptkörper (1) einen Fußabschnitt (11) mit einem Bereich (13) aufweist, welcher an die Einlaßöffnungswände (40) der Kanalschiene (4) angreift, wobei sich der Befestigungsabschnitt (12) von dem unteren Ende des Halteabschnitts (10) nach vorwärts erstreckt und mit lateralen gebogenen Wänden (121) versehen ist, welche die Spange (3) so halten, daß sie zu der Einlaßöffnung der Kanalschiene (4) longitudinal parallel ist;
eine Feder (14), die zwischen dem Befestigungsabschnitt (12) und der Spange (3) angeordnet ist, die an einem Ende (141) derselben an dem Befestigungsabschnitt (12) und an dem anderen Ende (142) an der Spange (3) eingehakt ist, wobei die Feder (14) so verdreht ist, daß sie die Spange (3) anhebt und der Spange (3) eine Rotation verleiht, wenn das Schraubelement (2) axial vorgeschoben wird.

3. Vorrichtung nach Anspruch 1, bei der der Befestigungsabschnitt (12) laterale gebogene Wände (121) aufweist, welche die Spange (3) halten, ein elastisches Element (14) zwischen dem Befestigungsabschnitt (12) und der Spange (3) vorgesehen ist, um sie miteinander zu koppeln, wobei das elastische Element (14) aufgewunden wird, wenn die Spange (3) über einen vorgegebenen Winkel gedreht wird und zwischen die lateral gebogenen Wände eingefügt wird, und das elastische Element (14) an die Spange (3) eine Rotationsenergie abgibt, wenn die Spange durch Vorschieben des Schraubelements (2) von dem gehaltenen Zustand freigegeben wird.

4. Vorrichtung nach Anspruch 3, bei der das elastische Element (14) eine Spiralfeder ist, die einen Spiralbereich (140) aufweist, in welchen ein Gewindekörper (21) des Schraubelements (2) eingesetzt ist, wobei die Spiralfeder an einem sich von dem Spiralbereich (140) derselben fortsetzenden Ende (141) derselben mit dem Befestigungsbereich (12) und an dem anderen Ende (142) mit einem von den Widerlagern (31) der Spange (3) verschiedenen Bereich gekoppelt ist.

5. Vorrichtung nach Anspruch 3, bei der das elastische Element (14) eine Zugfeder ist, die einen den Gewindekörper (21) des Schraubelements (2) spiralförmig umschließenden Spiralbereich (140) aufweist, wobei die Zugfeder an einem sich von dem Spiralbereich (140) derselben fortsetzenden einen Ende (141) derselben mit dem Befestigungsabschnitt (12) und an dem anderen Ende (142) mit einem von den Widerlagern (31) zu der Spange (3) verschiedenen Bereich gekoppelt ist.

6. Vorrichtung nach Anspruch 4 oder 5, bei der die Feder (14) durch Schweißen, Kleben oder Einhaken gekoppelt ist.

7. Vorrichtung nach einem der Ansprüche 3 bis 6, bei der die Spange (3) zwischen die lateral gebogenen Wände (121) des Befestigungsbereichs (12) eingefügt ist.

8. Vorrichtung nach einem der Ansprüche 3 bis 7, bei der die Spange (3) an die lateral gebogenen Wände (121) des Befestigungsabschnitts (12) angefügt ist.

9. Vorrichtung nach einem der Ansprüche 1 bis 8, bei der die Spange (3) eine Gesamtlänge hat, die größer als die Entfernung W₁ zwischen den die Einlaßöffnungswände (42) der Kanalschiene (4) definierenden Flächen, aber kleiner als die Entfernung W₂ zwischen den inneren Flächen der Flansche der Kanalschiene (4) ist, wobei die Spange (3) an dem longitudinalen Ende derselben mit den Widerlagern (31) und nahe den Widerlagern (31) mit einem Paar von sich höher als die Widerlager (31) erstreckenden Vorsprüngen (30) versehen ist, und die Vorsprünge (30) symmetrische Anschlagflächen (300) haben, welche an die die Einlaßöffnung definierenden Flächen anstoßen können, wenn die Spange (3) gedreht wird.

10. Vorrichtung nach Anspruch 9, bei der die Entfernung L₂ zwischen den Anschlagflächen (300) nahezu gleich der Entfernung W₁ zwischen den die Einlaßöffnung definierenden Flächen der Einlaßöffnungswände (40) ist, die Vorsprünge (30) Flächen (301) an den Anschlagflächen (300) gegenüberliegenden Seiten haben, die Entfernung L₃ von den gegenüberliegenden Anschlagflächen (301) zu dem freien Ende der Spange (3) größer als die Entfernung L₁ von der Anschlagfläche (300) zu dem freien Ende der Spange (3) ist, und die Entfernung L₄ zwischen den zwei gegenüberliegenden Anschlagflächen (301) kleiner als die Entfernung W₁ ist.

11. Vorrichtung nach Anspruch 9, bei der die Vorsprünge (30) paarweise Wände sind.

12. Vorrichtung nach Anspruch 11, bei der die Wände geteilte Wände enthalten.

13. Vorrichtung nach Anspruch 9, bei der die Vorsprünge (30) paarweise klinkenartige sind.

14. Vorrichtung nach Anspruch 9, bei der die Vorsprünge (30) paarweise Säulen sind.

15. Vorrichtung nach einem der Ansprüche 9 bis 14, bei der an dem Anfangsende der Spange (3) auf der Seite der gegenüberliegenden Anschlagfläche (301) eine Sub-Anschlagfläche (304) vorgesehen ist.

16. Vorrichtung nach Anspruch 11 oder 12, bei der die lateral gebogene Wand (121) des Befestigungsabschnitts (12) mehr als einen Vorsprung (122) aufweist und der Vorsprung (30) einen konkaven Bereich (340) aufweist, in welchem der Vorsprung (121) sich in Eingriff befindet.

17. Vorrichtung nach einem der Ansprüche 9 bis 16, bei der die Spange (3) die Querschnittsform einer durch die Spange (3a) definierten Rinne und Flansche (3b) aufweist, und das Widerlager (31) auf einem Flansch (3b) ausgebildet ist.

18. Vorrichtung nach Anspruch 1 oder einem der Ansprüche 3 bis 17, bei der der Hauptkörper (1) einen sich von dem Halteabschnitt (10) fortsetzenden Fußabschnitt (11) aufweist und der Fußabschnitt (11) an dessen Basis ausgebildet einen gekrümmten Bereich (100) hat, welcher an die Krümmung des Rohrs (5) angepaßt ist.

19. Vorrichtung nach Anspruch 1, bei der die Spange (3) durch ein zwischen den Befestigungsabschnitt (12) und den Kopf (20) des Schraubelements (2) eingefügtes elastisches Element (14) angehoben wird, und die Spange (3) durch das Zusammenwirken zwischen einem in der Mitte des Gewindekörpers des Schraubelements (2) vorgesehenen Rotationsführungsabschnitt (24) und einem Führungsloch (120a) des Befestigungsabschnitts (12) gedreht wird.

20. Vorrichtung nach Anspruch 19, bei der der Rotationsführungsabschnitt (24) ein Zahnrad oder dergleichen ist.

21. Vorrichtung nach Anspruch 19, bei der der Rotationsführungsabschnitt (24) eine Schraube mit mehreren Gewindegängen ist.

22. Vorrichtung nach Anspruch 19, bei der der Rotationsführungsabschnitt (24) eine einen polygonalen Abschnitt aufweisende Torsionsstange ist.

23. Vorrichtung nach Anspruch 19, bei der das elastische Element (14) eine Spiralfeder ist.

24. Vorrichtung nach Anspruch 19, bei der die Spange (3) eine Gesamtlänge hat, die größer als die Entfernung W₁ zwischen den die Einlaßöffnung (42) der Kanalschiene (4) definierenden Flächen, aber kleiner als die Entfernung W₂ zwischen den inneren Flächen der Flansche der Kanalschiene (4) ist, die Spange (3) an deren longitudinalem Ende mit den Widerlagern (31) und nahe den Widerlagern (31) mit einem Paar von sich höher als die Widerlager (31) erstreckenden Vorsprüngen (30) versehen ist, und die Vorsprünge (30) symmetrische Anschlagflächen (300) aufweisen, welche an die die Einlaßöffnung definierenden Flächen anstoßen können, wenn die Spange (3) gedreht wird.

25. Vorrichtung nach Anspruch 24, bei der die Entfernung L₂ zwischen den zwei Anschlagflächen (300) nahezu gleich der Entfernung W₁ zwischen den die Einlaßöffnung definierenden Flächen ist, die Vorsprünge (30) an den Anschlagflächen (300) gegenüberliegenden Seiten Flächen (301) haben, wobei die Entfernung L₃ von den gegenüberliegenden Anschlagflächen (301) zu dem freien Ende der Spange (3) größer als die Entfernung L₁ von der Anschlagfläche (300) zu dem freien Ende der Spange (3) ist, und die Entfernung L₄ zwischen den zwei gegenüberliegenden Anschlagflächen (301) kleiner als die Entfernung W₁ ist.

26. Vorrichtung nach Anspruch 24, bei der die Vorsprünge (30) paarweise Wände sind.

27. Vorrichtung nach Anspruch 26, bei der die Wände geteilte Wände enthalten.

28. Vorrichtung nach Anspruch 24, bei der die Vorsprünge (30) paarweise klinkenartige sind.

29. Vorrichtung nach Anspruch 24, bei der die Vorsprünge (30) paarweise Säulen sind.

30. Vorrichtung nach einem der Ansprüche 24 bis 29, bei der an dem Anfangsende der Spange (3) auf der Seite der gegenüberliegenden Anschlagfläche (301) eine Sub-Anschlagfläche (304) vorgesehen ist.

31. Vorrichtung nach einem der Ansprüche 25 bis 30, bei der die Spange (3) die Querschnittsform einer Rinne hat, die durch den Steg (3a) und Flansche (3b) definiert ist und das Widerlager (31) auf einem Flansch (3b) ausgebildet ist.

32. Vorrichtung nach einem der Ansprüche 19 bis 31, bei der der Hauptkörper (1) einen sich von dem Halteabschnitt (10) fortsetzenden Fußabschnitt (11) aufweist, und der Fußabschnitt (11) an der Basis desselben einen gekrümmten Bereich (100) ausgebildet hat, welcher an die Krümmung des Rohrs (5) angepaßt ist.

33. Vorrichtung nach Anspruch 1, bei der die Spange (3) aus zwei Befestigungselementen (3A) besteht, welche um die horizontale Achse schwingen können, bei Zug durch ein zwischen den Kopf (20) des Schraubelements (2) und den Befestigungsabschnitt (12) eingefügtes elastisches Element (14) zwischen lateralen gebogenen Wänden (121) des Befestigungsabschnitts (12) gehalten werden, wobei die Befestigungselemente (3A) geschlossen werden, sobald sie die die Einlaßöffnung (42) der Kanalschiene (4) definierenden Wände beim Absenken berühren, wenn das Schraubelement (2) axial vorgeschoben wird, und dann um die horizontale Achse rotiert und geöffnet werden, so daß die Widerlager (31) von unten in Anlage an die Einlaßöffnungswände (40) gebracht werden.

34. Vorrichtung nach Anspruch 33, bei der die Spange (3) in deren Mitte mit einem Mutterelement (3B) versehen ist, mit welchem die Befestigungselemente (3A) mittels einer Achse (6) gekoppelt sind, die Befestigungselemente (3A), wenn sie geöffnet sind, eine Länge L haben, die kleiner als die Entfernung W₂ zwischen den inneren Flächen der Flansche der Kanalschiene (4) ist, und die Befestigungselemente (3A) Anschlagflächen (300) haben, die hoch über die Widerlager (31) ansteigen und welche an die die Einlaßöffnung (42) definierenden Flächen anstoßen können.

35. Vorrichtung nach Anspruch 33 oder 34, bei der die Befestigungselemente (3A) durch ein elastisches Element (7) so beaufschlagt werden, daß sie stets offen sind.

36. Vorrichtung nach einem der Ansprüche 33 bis 35, bei der jedes der Befestigungselemente (3A) die Querschnittsform einer Nut hat, Flansche (3b) mittels der Achse (6) in dem Mutterelement (3B) abgestützt werden, und das Ende des Stegs (3a) an der Seitenfläche des Mutterelements (3B) anstößt, so daß die Öffnung der Befestigungselemente (3A) beschränkt ist.

37. Vorrichtung nach einem der Ansprüche 1 bis 36, bei der der Hauptkörper (1) dazu vorgesehen ist, eine Anzahl von Rohren zu halten.

38. Vorrichtung nach Anspruch 37, bei der der Halteabschnitt (10) des Hauptkörpers (1) einen gekrümmten Bereich (10a) auf jeder Seite desselben und einen die gekrümmten Bereiche (10a) verbindenden geraden Bereich (10b) aufweist und dort an jeder Seite gebogen, sich in der Richtung der Breite von dem geraden Bereich (10b) erstreckend mindestens ein Satz von Vorsprüngen (10d) mit konkaven kreisförmigen Flächen (10c) ausgebildet ist.

39. Vorrichtung nach einem der Ansprüche 1 bis 17 oder einem der Ansprüche 19 bis 32 oder einem der Ansprüche 33 bis 38, bei der der Befestigungsabschnitt (12) auf jeder Seite des Halteabschnitts (10) vorgesehen ist.

40. Vorrichtung nach einem der Ansprüche 1 bis 39, bei der die die Einlaßöffnung der Kanalschiene (4) definierenden Flächen eine vertikal herabhängende Art, eine schräg herabhängende Art und eine horizontale Art enthalten.

## Revendications

1. Dispositif pour fixer un conduit (5) à un profilé en U (4) constitué d'une âme (4a), d'une paire d'ailes (4b) prévues des deux côtés de l'âme et de parois supérieures (4c) s'étendant vers l'intérieur à partir des extrémités supérieures des ailes de manière à former des parois (40) délimitant une ouverture d'entrée avec des faces définissant entre elles l'ouverture d'entrée (42), ce dispositif comprenant un corps principal (1) ayant une section de retenue (10) dont la forme correspond à la forme de la section transversale du conduit (5) et ayant une section de siège (12) contiguë à la section de retenue (10), une boucle (3) ayant des butées (31) et des faces d'arrêt (300) qui peuvent être placées dans une première position permettant à la boucle d'être introduite dans l'ouverture d'entrée (42) et qui peuvent être tournées ensuite dans une seconde position dans laquelle les butées (31) viennent dans une position prédéterminée, en dessous des parois (40) délimitant l'ouverture d'entrée, de manière à buter contre ces parois à partir du dessous, et dans laquelle les faces d'arrêt (300) sont en butée contre des portions sélectionnées du profilé en U (4) afin d'empêcher une rotation additionnelle, une vis (2) qui comporte une tête (20) à son extrémité supérieure et une tige pénétrant dans la section de siège (12) du corps principal (1) et qui est filetée, dans sa partie extrême inférieure, pour être en prise avec un trou fileté (33) dans la boucle (3), afin de constituer un moyen pour tirer la boucle en direction de la tête (20) de la vis (2) tandis que les butées (31) se trouvent dans la seconde position, caractérisé en ce que la section de siège (12) est pourvue de moyens (121,122) pour maintenir la boucle (3) dans la première position qui permet à la boucle de pénétrer dans l'ouverture d'entrée (42) lorsque la vis (2) est poussée axialement vers le bas, la boucle (3) et la vis (2) sont accouplées à un mécanisme (14,24;6,7) répondant à la force de poussée vers le bas s'exerçant sur la vis en déplaçant la boucle (3) vers le bas dans l'ouverture d'entrée (42) et en provoquant automatiquement une rotation des butées (31) et des faces d'arrêt (300) vers et dans la seconde position lorsque les butées (31) quittent l'ouverture d'entrée (42) à l'endroit du côté inférieur de cette ouverture, et les faces d'arrêt (300) sont adaptées de manière à venir buter contre les faces définissant l'ouverture d'entrée des parois (40) délimitant l'ouverture d'entrée lorsqu'elles arrivent dans la seconde position.

2. Dispositif suivant la revendication 1, pour fixer un conduit (5) à un profilé en U (4) perpendiculairement à ce dernier, caractérisé en ce que la boucle (3) a une largeur W plus petite que la distance W₁ entre les faces définissant l'ouverture d'entrée (42) du profilé en U (4) et une longueur L plus grande que la distance W₁ mais plus petite que la distance W₂ entre les faces internes des ailes, la boucle (3) comprend, dans sa partie médiane, le trou fileté (33), à chacune de ses extrémités longitudinales, les butées (31) et, à l'endroit des portions de la boucle autres que les butées (31), une paire de saillies (30) s'étendant bien au-dessus des butées (31) et comportant les faces d'arrêt (300), le corps principal (1) a une section de pied (11) avec une portion (13) qui vient en contact avec les parois (40) délimitant l'ouverture d'entrée du profilé en U (4), la section de siège (12) s'étendant vers l'avant à partir de l'extrémité inférieure de la section de retenue (10) et étant pourvue de parois latérales repliées (121) qui maintiennent la boucle (3) de manière qu'elle soit longitudinalement parallèle à l'ouverture d'entrée (42) du profilé en U (4), et un ressort (14) est disposé entre la section de siège (12) et la boucle (3), il est accroché, à l'une de ses extrémités (141), à la section de siège (12) et, à son autre extrémité (142), à la boucle (3), le ressort (14) étant tordu de manière à soulever la boucle (3) et à donner un mouvement de rotation à cette boucle (3) lorsque la vis (2) est poussée axialement.

3. Dispositif suivant la revendication 1 caractérisé en ce que la section de siège (12) a des parois latérales repliées (121) qui maintiennent la boucle (3), un élément élastique (14) est prévu entre la section de siège (12) et la boucle (3) pour les accoupler l'une à l'autre, l'élément élastique (14) est enroulé lorsque la boucle (3) est tournée d'un angle prédéterminé et est emboîtée entre les parois latérales repliées (121) et l'élément élastique (14) donne une énergie de rotation à la boucle (3) lorsque cette boucle est libérée de l'état maintenu en poussant la vis (2).

4. Dispositif suivant la revendication 3 caractérisé en ce que l'élément élastique (14) est un ressort hélicoïdal comportant une portion hélicoïdale (140) dans laquelle est introduite une tige filetée (21) de la vis (2), le ressort hélicoïdal étant relié, à l'une de ses extrémités (141) contiguë à sa portion hélicoïdale (140), à la section de siège (12) et, à son autre extrémité (142), à une portion, autres que les butées (31), de la boucle (3).

5. Dispositif suivant la revendication 3 caractérisé en ce que l'élément élastique (14) est un ressort de traction comportant une portion hélicoïdale (140) enfermant hélicoïdalement une tige filetée (21) de la vis (2), le ressort hélicoïdal étant relié, à l'une de ses extrémités (141) contiguë à sa portion hélicoïdale (140), à la section de siège (12) et, à son autre extrémité (142), à une portion, autres que les butées (31), de la boucle (3).

6. Dispositif suivant l'une quelconque des revendications 4 ou 5 caractérisé en ce que le ressort (14) est attaché par soudage, collage ou accrochage.

7. Dispositif suivant l'une quelconque des revendications 3 à 6 caractérisé en ce que la boucle (3) est emboîtée entre les parois latérales repliées (121) de la section de siège (12).

8. Dispositif suivant l'une quelconque des revendications 3 à 7 caractérisé en ce que la boucle (3) est emboîtée par-dessus les parois latérales repliées (121) de la section de siège (12).

9. Dispositif suivant l'une quelconque des revendications 1 à 8 caractérisé en ce que la boucle (3) a une longueur totale plus grande que la distance W₁ entre les faces définissant l'ouverture d'entrée (42) du profilé en U (4) mais plus petite que la distance W₂ entre les faces internes des ailes du profilé en U (4), elle est pourvue, à ses extrémités longitudinales, des butées (31) et, à proximité des butées (31), d'une paire de saillies (30) s'étendant plus haut que les butées (31), et les saillies (30) présentent des faces d'arrêt (300) symétriques qui peuvent venir buter contre les faces définissant l'ouverture d'entrée (42) lorsque la boucle (3) est tournée.

10. Dispositif suivant la revendication 9 caractérisé en ce que la distance L₂ entre les deux faces d'arrêt (300) est sensiblement égale à la distance W₁ entre les faces définissant l'ouverture d'entrée (42) des parois (40) délimitant l'ouverture d'entrée, les saillies (30) présentent des faces (301) sur les côtés opposés aux faces d'arrêt (300), la distance L₃ s'étendant des faces (301) opposées aux faces d'arrêt jusqu'à l'extrémité libre de la boucle (3) est plus grande que la distance L₁ s'étendant de la face d'arrêt (300) jusqu'à l'extrémité libre de la boucle (3), et la distance L₄ entre les deux faces (301) opposées aux faces d'arrêt est plus petite que la distance W₁.

11. Dispositif suivant la revendication 9 caractérisé en ce que les saillies (30) en paire sont des parois.

12. Dispositif suivant la revendication 11 caractérisé en ce que les parois comportent des parois subdivisées.

13. Dispositif suivant la revendication 9 caractérisé en ce que les saillies (30) en paire sont du type cliquet.

14. Dispositif suivant la revendication 9 caractérisé en ce que les saillies (30) en paire sont des colonnes.

15. Dispositif suivant l'une quelconque des revendications 9 à 14 caractérisé en ce qu'une sous-face d'arrêt (304) est prévue à l'extrémité de la boucle (3) située du côté de la face (301) opposée à la face d'arrêt.

16. Dispositif suivant l'une quelconque des revendications 11 ou 12 caractérisé en ce que la paroi latérale repliée (121) de la section de siège (12) comporte plusieurs protubérances (122) et la saillie (30) présente un creux (340) dans lequel s'engage la protubérance (121).

17. Dispositif suivant l'une quelconque des revendications 9 à 16 caractérisé en ce que la boucle (3) a la forme en coupe d'une gorge, définie par l'âme (3a) et les ailes (3b), et la butée (31) est formée sur une aile (3b).

18. Dispositif suivant la revendication 1 ou l'une quelconque des revendications 3 à 17 caractérisé en ce que le corps principal (1) présente une section de pied (11) contiguë à la section de retenue (10) et à la base de la section de pied (11) est formée une portion courbe (100) qui épouse la courbure du conduit (5).

19. Dispositif suivant la revendication 1 caractérisé en ce que la boucle (3) est soulevée par un élément élastique (14) interposé entre la section de siège (12) et la tête (20) de la vis (2) et la boucle (3) est tournée par suite de la coopération entre une section d'entraînement en rotation (24), prévue au milieu de la tige filetée de la vis (2), et un trou de guidage (120a) de la section de siège (12).

20. Dispositif suivant la revendication 19 caractérisé en ce que la section d'entraînement en rotation (24) est un pignon ou un élément similaire.

21. Dispositif suivant la revendication 19 caractérisé en ce que la section d'entraînement en rotation (24) est une vis à filets multiples.

22. Dispositif suivant la revendication 19 caractérisé en ce que la section d'entraînement en rotation (24) est une barre de torsion ayant une section polygonale.

23. Dispositif suivant la revendication 19 caractérisé en ce que l'élément élastique (14) est un ressort hélicoïdal.

24. Dispositif suivant la revendication 19 caractérisé en ce que la boucle (3) a une longueur totale plus grande que la distance W₁ entre les faces définissant l'ouverture d'entrée (42) du profilé en U (4) mais plus petite que la distance W₂ entre les faces internes des ailes du profilé en U (4), elle est pourvue, à ses extrémités longitudinales, des butées (31) et, à proximité des butées (31), d'une paire de saillies (30) s'étendant plus haut que les butées (31), et les saillies (30) présentent des faces d'arrêt (300) symétriques qui peuvent venir buter contre les faces définissant l'ouverture d'entrée (42) lorsque la boucle (3) est tournée.

25. Dispositif suivant la revendication 24 caractérisé en ce que la distance L₂ entre les deux faces d'arrêt (300) est sensiblement égale à la distance W₁ entre les faces définissant l'ouverture d'entrée (42) des parois (40) délimitant l'ouverture d'entrée, les saillies (30) présentent des faces (301) sur les côtés opposés aux faces d'arrêt (300), la distance L₃ s'étendant des faces (301) opposées aux faces d'arrêt jusqu'à l'extrémité libre de la boucle (3) est plus grande que la distance L₁ s'étendant de la face d'arrêt (300) jusqu'à l'extrémité libre de la boucle (3), et la distance L₄ entre les deux faces (301) opposées aux faces d'arrêt est plus petite que la distance W₁.

26. Dispositif suivant la revendication 24 caractérisé en ce que les saillies (30) en paire sont des parois.

27. Dispositif suivant la revendication 26 caractérisé en ce que les parois comportent des parois subdivisées.

28. Dispositif suivant la revendication 24 caractérisé en ce que les saillies (30) en paire sont du type cliquet.

29. Dispositif suivant la revendication 24 caractérisé en ce que les saillies (30) en paire sont des colonnes.

30. Dispositif suivant l'une quelconque des revendications 24 à 29 caractérisé en ce qu'une sous-face d'arrêt (304) est prévue à l'extrémité de la boucle (3) située du côté de la face (301) opposée à la face d'arrêt.

31. Dispositif suivant l'une quelconque des revendications 25 à 30 caractérisé en ce que la boucle (3) a la forme en coupe d'une gorge, définie par l'âme (3a) et les ailes (3b), et la butée (31) est formée sur une aile (3b).

32. Dispositif suivant l'une quelconque des revendications 19 à 31 caractérisé en ce que le corps principal (1) présente une section de pied (11) contiguë à la section de retenue (10) et à la base de la section de pied (11) est formée une portion courbe (100) qui épouse la courbure du conduit (5).

33. Dispositif suivant la revendication 1 caractérisé en ce que la boucle (3) est constituée de deux organes de fixation (3A) qui peuvent osciller autour de l'axe horizontal et qui sont maintenus entre les parois latérales repliées (121) de la section de siège (12) en étant tirés par un élément élastique (14) interposé entre la tête (20) de la vis (2) et la section de siège (12), les organes de fixation (3A) étant fermés, tandis qu'ils descendent, lorsqu'ils viennent toucher les faces définissant l'ouverture d'entrée (42) du profilé en U (4), lorsque la vis (2) est poussée axialement, et étant ensuite tournés autour de l'axe horizontal et ouverts de telle façon que les butées (31) soient placées de manière à venir buter contre les parois (40) délimitant l'ouverture d'entrée à partir du dessous.

34. Dispositif suivant la revendication 33 caractérisé en ce que la boucle (3) présente, dans sa partie centrale, un écrou (3B) auquel les organes de fixation (3A) sont accouplés au moyen d'un pivot (6), les organes de fixation (3A) ayant une longueur L, lorsqu'ils sont ouverts, plus petite que la distance W₂ entre les faces internes des ailes du profilé en U (4), et les organes de fixation (3A) présentent des faces d'arrêt (300) s'élevant bien au-dessus des butées (31) et qui peuvent venir buter contre les faces définissant l'ouverture d'entrée (42).

35. Dispositif suivant l'une quelconque des revendications 33 ou 34 caractérisé en ce que les organes de fixation (3A) sont sollicités par au moins un élément élastique (7) de manière à être toujours ouverts.

36. Dispositif suivant l'une quelconque des revendications 33 à 35 caractérisé en ce que chacun des organes de fixation (3A) a la forme en coupe d'une gorge, les ailes (3b) sont supportées dans l'écrou (3B) au moyen du pivot (6) et l'extrémité de l'âme (3a) vient buter contre la face latérale de l'écrou (3B) de telle façon que l'ouverture des organes de fixation (3A) soit limitée.

37. Dispositif suivant l'une quelconque des revendications 1 à 36 caractérisé en ce que le corps principal (1) est adapté pour maintenir plusieurs conduits.

38. Dispositif suivant la revendication 37 caractérisé en ce que la section de retenue (10) du corps principal (1) présente une portion courbe (10a) sur ses deux côtés et une portion rectiligne (10b) reliant les portions courbes (10a) et au moins un ensemble de saillies (10d), ayant des faces circulaires concaves (10c), sont formées par pliage, des deux côtés, dans le sens de la largeur, de la portion rectiligne (10b).

39. Dispositif suivant l'une quelconque des revendications 1 à 17 ou suivant l'une quelconque des revendications 19 à 32 ou suivant l'une quelconque des revendications 33 à 38 caractérisé en ce que la section de siège (12) est prévue des deux côtés de la section de retenue (10).

40. Dispositif suivant l'une quelconque des revendications 1 à 39 caractérisé en ce que les faces définissant l'ouverture d'entrée du profilé en U (4) comprennent un type de face s'étendant verticalement vers le bas, un type de face s'étendant obliquement vers le bas et un type de face horizontal.
